# EUROPEAN PATENT SPECIFICATION

(11) **EP 4 364 443 B1**
(45) Date of publication and mention of the grant of the patent: **30.09.2026**
(21) Application number: 22831414.2
(22) Date of filing: 29.04.2022
(51) Int. Cl.: H04W 4/40, H04L 67/52, H04W 4/02, H04W 4/021, H04W 4/029, H04W 4/50, H04W 4/44, H04W 92/18

(54) **LOCATION-BASED SERVICE ACCESS FOR VEHICLE-TO-EVERYTHING (V2X) SYSTEMS**
STANDORTBASIERTER DIENSTZUGRIFF FÜR VEHICLE-TO-EVERYTHING (V2X)-SYSTEME
ACCÈS À UN SERVICE BASÉ SUR LA LOCALISATION POUR DES SYSTÈMES DE VÉHICULE À TOUT (V2X)

(30) Priority: 28.06.2021 WO PCT/CN2021/102620
(43) Date of publication of application: 08.05.2024
(73) Proprietor: Qualcomm Incorporated, San Diego, CA 92121-1714 (US)
(72) Inventor: LI, Yan, San Diego, CA 92121-1714 (US); CHEN, Shuping, San Diego, CA 92121-1714 (US); YIN, Yue, San Diego, CA 92121-1714 (US)
(74) Representative: Tomkins & Co
(86) International application number: PCT/CN2022/090174
(87) International publication number: WO 2023/273586

(56) References cited:
- WO-A1-2017/121098
- WO-A2-2019/245378
- CN-A- 105 577 788
- CN-A- 113 010 604
- US-A1- 2020 053 513
- US-A1- 2020 351 859
- US-B1- 10 652 721
- HUAWEI, HISILICON: "LCS architecture enhancement addressing Key Issue #1 in TR 23.731", 3GPP DRAFT; S2-183691 LCS ARCHITECTURE ENHANCEMENT ADDRESSING KI1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sanya, China; 20180416 - 20180420, 10 April 2018 (2018-04-10), Mobile Competence Centre ; 650, route des Lucioles ; F-06921 Sophia-Antipolis Cedex ; France , XP051437992

## Description

### FIELD OF TECHNOLOGY

The following relates to wireless communications, including location-based service access for vehicle-to-everything (V2X) systems.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

Some wireless communications systems may support vehicles communicating using vehicle-to-everything (V2X) communications. In some examples, vehicles may support V2X communications over a sidelink (e.g., a PC5 link) or an access link (e.g., a Uu link with a network device). In some cases, vehicles may communicate intelligent transportation system (ITS) information, such as traffic information, map information, road information, local weather information, etc. Improved techniques for communicating ITS information using V2X communications may be desired.
WO 2019/245378 A2 discloses a Roadside unit (RSU) being allocated to a GPS position in a computer coded map section, wherein the RSU is indicated with a computer coded visual symbol at the GPS position, wherein the GPS position is related to a GPS position on the ground along a road, wherein a Roadside server is configured to track movements of cars inside the geographical area defined by the map section, wherein the Roadside server is configured to establish communication with cars detected to be within a first defined distance from the RSU, and to terminate the communication with the detected car when the car has moved a second defined distance away from the RSU.
CN 113 010 604 A discloses a map data synchronization method and system, a cloud server and a storage medium; wherein the cloud server monitors the update state of map data in real time, identifies updated tile data in time, and then sends the updated tile data to an edge server corresponding to the tile data according to a preset corresponding relationship.

### SUMMARY

The described techniques relate to improved methods, systems, devices, and apparatuses that support location-based service access for vehicle-to-everything (V2X) systems. Generally, the described techniques provide for utilizing both sidelinks (e.g., PC5 links) and access links (e.g., Uu links) to communicate location-based information in a V2X system. For example, a user equipment (UE), such as a vehicle, may access a location-based service via an access link to retrieve location-based information using a network address (e.g., an address of a local server) provided by a roadside unit (RSU) via a sidelink. For instance, in some cases, the UE may be unable to access the location-based service without a network address associated with the location-based service. Accordingly, the RSU may generate an indication of the network address and may broadcast a sidelink message (e.g., over a PC5 link) that includes the indication of the network address. The UE may receive the sidelink message (e.g., if within a coverage area associated with the PC5 link) and may determine (e.g., and store) the indicated network address. Based on a location of the UE, the UE may access the location-based service over a connection with a network device (e.g., an access link, a Uu link) using the network address. For example, as the UE travels, the UE may enter a geographic area associated with the location-based service (e.g., a geographic area for which the location-based service provides location-based information). Accordingly, if the UE is within the geographic area, the UE may access the location-based service and may receive location-based information from the location-based service over the connection. The invention is defined in the independent claims, to which reference should now be made. Advantageous embodiments are set out in the dependent claims.

A method for wireless communication at a UE is described. The method comprises: receiving, from an RSU, a sidelink message including an indication of a network address associated with a location-based service and further comprising a first version number associated with map data for a region associated with a location of the UE; accessing the location-based service over a connection with a network device, where the location-based service is accessed using the network address received from the RSU and based on the location of the UE; receiving location-based information from the location-based service over the connection with the network device, wherein the location-based information comprises the map data corresponding to the first version number; comparing the first version number to a second version number associated with map data stored at the UE; and determining that the first version number is different from the second version number based at least in part on the comparison, wherein accessing the location-based service is based at least in part on the first version number and the second version number being different.

An apparatus for wireless communication at a UE is described. The apparatus comprises a processor, memory coupled with the processor, and instructions stored in the memory. The instructions are executable by the processor to cause the apparatus to: receive, from an RSU, a sidelink message including an indication of a network address associated with a location-based service and further comprising a first version number associated with map data for a region associated with a location of the UE; access the location-based service over a connection with a network device, where the location-based service is accessed using the network address received from the RSU and based on the location of the UE; receive location-based information from the location-based service over the connection with the network device, wherein the location-based information comprises the map data corresponding to the first version number; compare the first version number to a second version number associated with map data stored at the UE; and determine that the first version number is different from the second version number based at least in part on the comparison, wherein accessing the location-based service is based at least in part on the first version number and the second version number being different.

In some examples of the method, and apparatus described herein, the sidelink message further indicates a set of one or more locations at which the UE accesses the location-based service to receive the location-based information, the location-based information including signal phase and timing (SPaT) information for a respective location of the set of one or more locations.

Some examples of the method, and apparatus described herein may further include operations, features, means, or instructions for comparing the location of the UE to the set of one or more locations and determining that the location of the UE matches a location of the set of one or more locations based on the comparison, where accessing the location-based service may be based on the location of the UE matching the location of the set of one or more locations.

In some examples of the method, and apparatus described herein, the sidelink message further indicates a second set of one or more locations at which the UE receives the location-based information from one or more second RSUs without accessing the location-based service.

In some examples of the method, and apparatus described herein, the sidelink message further indicates a region in which a network associated with the region provides geo-protected information and the location-based information includes the geo-protected information.

Some examples of the method, and apparatus described herein may further include operations, features, means, or instructions for comparing the network address to a second network address associated with the location-based service stored at the UE, where accessing the location-based service may be based on the comparison.

Some examples of the method, and apparatus described herein may further include operations, features, means, or instructions for determining that the network address may be different from the second network address based on the comparison and storing the network address at the UE based on the network address being different from the second network address.

In some examples of the method, and apparatus described herein, the sidelink message includes commercial information specific to the location of the UE and accessing the location-based service may be based on the commercial information.

In some examples of the method, and apparatus described herein, the sidelink message includes an indication of a service type associated with the location-based service and accessing the location-based service is based on the service type.

In some examples of the method, and apparatus described herein, the sidelink message includes an indication of an application description associated with the location-based service and accessing the location-based service is based on the application description.

Some examples of the method, and apparatus described herein may further include operations, features, means, or instructions for receiving a second sidelink message indicating a first set of one or more locations at which the UE accesses the location-based service to receive the location-based information, a second set of one or more locations at which the UE receives the location-based information from one or more second RSUs without accessing the location-based service, a version number associated with the location-based information, a region in which a network associated with the region provides the location-based information, commercial information specific to the location of the UE, or a combination thereof, where accessing the location-based service may be based on receiving the second sidelink message.

Some examples of the method, and apparatus described herein may further include operations, features, means, or instructions for receiving, from the RSU, a request for an authentication code associated with the UE and transmitting, in response to receiving the request, the authentication code to the RSU, where receiving the sidelink message may be based on transmitting the authentication code.

### BRIEF DESCRIPTION OF THE DRAWINGS

FIGs. 1 and 2 illustrate examples of wireless communications systems that support location-based service access for vehicle-to-everything (V2X) systems in accordance with aspects of the present disclosure.
FIGs. 3 through 5 illustrate examples of process flows that support location-based service access for V2X systems in accordance with aspects of the present disclosure.
FIG. 6 illustrates an example of a wireless communications system that supports location-based service access for V2X systems in accordance with aspects of the present disclosure.
FIGs. 7 and 8 show block diagrams of devices that support location-based service access for V2X systems in accordance with aspects of the present disclosure.
FIG. 9 shows a block diagram of a communications manager that supports location-based service access for V2X systems in accordance with aspects of the present disclosure.
FIG. 10 shows a diagram of a system including a device that supports location-based service access for V2X systems in accordance with aspects of the present disclosure.
FIGs. 11 and 12 show block diagrams of devices that support location-based service access for V2X systems in accordance with aspects of the present disclosure.
FIG. 13 shows a block diagram of a communications manager that supports location-based service access for V2X systems in accordance with aspects of the present disclosure.
FIG. 14 shows a diagram of a system including a device that supports location-based service access for V2X systems in accordance with aspects of the present disclosure.
FIGs. 15 through 20 show flowcharts illustrating methods that support location-based service access for V2X systems in accordance with aspects of the present disclosure.

### DETAILED DESCRIPTION

Some wireless communications systems may support access links (e.g., a Uu link) and sidelinks (e.g., a PC5 link) for communications between communication devices. Access links may refer to communication links through which a communication device (e.g., a UE) accesses a wireless communications system, such as a communication link between a UE and a network device. For example, an access link may support uplink signaling, downlink signaling, connection procedures, etc. Sidelinks may refer to any communication link between similar communication devices (e.g., a communication link between UEs, or a backhaul communication link between network devices). It is noted that while various examples of sidelinks provided herein are discussed for vehicle-to-everything (V2X) communications, such sidelink techniques may be used for any type of wireless devices that use sidelink communications. For example, a sidelink may support one or more of device-to-device (D2D) communications, vehicle-to-vehicle (V2V) communications, message relaying, discovery signaling, beacon signaling, or other signals transmitted over-the-air from one UE to one or more other UEs.

In some examples, wireless communications systems may support communicating location-based information to UEs, such as to vehicles, using V2X communications. Examples of location-based information may include intelligent transportation system (ITS) information, signal phase and timing (SPaT) information, map information, geo-protected information, and commercial information, among other examples of location-based information. In some cases, some types of location-based information (e.g., SPaT information, map information) may be transmitted to a UE from a roadside unit (RSU) via a sidelink (e.g., a PC5 link). However, RSU sidelink communications may be associated with a relatively limited communication range (e.g., 300 meters, or some other communication range). Accordingly, a coverage of RSU sidelink communications may be discontinuous. The coverage may be increased by deploying additional RSUs, however, this may increase a cost associated with communicating via RSUs. Additionally, as a quantity of RSUs increases, a latency associated with updating the RSUs with the location-based information to be transmitted may also increase.

In some cases, a UE may pull location-based information from one or more local servers (e.g., a multi-access edge computing (MEC) server) connected to a network, for example, via a Uu link. The use of local servers may enable location-based information to remain local to a particular region and reduce latency associated with providing location-based information. For example, some entities, such as regional governments, may utilize local servers to provide location-based information that is local to the regional government. This may reduce or eliminate location-based information being routed through a central server (e.g., a national server associated with multiple regions), thereby reducing latency and reducing or eliminating the sharing of location-based information via the central server. However, a UE may be unable to access a local server without an address of the local server (e.g., a uniform resource location (URL) of the server, a network address associated with the local server). Therefore, in some cases, the UE may store a list of local server addresses, which the UE may use to access the local servers. But addresses of local servers may be changed over time and new local servers with new addresses may continue to be built. Accordingly, maintaining and storing a list of local server addresses that may be used by a UE may be unfeasible, thus limiting the efficacy of local server implementations.

Techniques, systems, and devices are described herein for enabling UE access to location-based services (e.g., via local servers) by providing network addresses (e.g., local server addresses) to a UE via a sidelink between the UE and an RSU. For example, an RSU may broadcast a sidelink message (e.g., over a PC5 link) that includes a network address for a location-based service. A UE may receive the sidelink message (e.g., if within a coverage area associated with the PC5 link) and may determine (e.g., and store) the indicated network address. The UE may then access the location-based service over a connection with a network device (e.g., an access link, a Uu link) using the network address and may receive (e.g., retrieve) location-based information from the location-based service over the connection.

The UE may access the location-based service based on a location of the UE. For example, as the UE travels, the UE may enter a geographic area associated with the location-based service (e.g., a geographic area for which the location-based service provides location-based information). When the UE is within the geographic area, the UE may access the location-based service and may receive location-based information from the location-based service over the connection. In some cases, the UE may receive (e.g., via the sidelink message, via a second sidelink message) information associated with the location-based information. For instance, the sidelink message (e.g., or a second sidelink message) may indicate one or more SPaT configurations, a newest version number of map data for a region, that geo-protected information is provided within a particular region, commercial information, or a combination thereof. The UE may use the indicated information associated with the location-based information in conjunction with the indicated network address to retrieve corresponding location-based information (e.g., SPaT information, map data, geo-protected information, additional commercial information) from the location-based service.

In this way, the UE may improve local server implementations and support the scaling of such implementations. For example, because network addresses may be provided by RSUs, the UE may maintain and store a relatively small list of network addresses at the UE (e.g., or may not maintain and store a list of network addresses) and may still be able to access local servers whose network address is not stored at the UE. This may improve storage utilization at the UE (e.g., by reducing a quantity of network addresses stored at the UE) and may support the updating and addition of network addresses.

Aspects of the subject matter described in this disclosure may additionally be implemented to realize one or more of the following potential improvements, among others. The techniques employed by the UE and the RSU may provide benefits and enhancements to the operation of the UE. For example, operations performed by the UE and the RSU may provide improvements to receiving location-based information using V2X communications. In some examples, accessing a location-based service using a network address provided by an RSU may improve location-based information delivery, network discovery and selection, latency, and storage utilization at a UE. In some other examples, accessing a location-based service using a network address provided by an RSU may provide improvements to traffic steering, connectivity, spectral efficiency, coordination between devices, resource usage, and processing capability, among other benefits.

Aspects of the disclosure are initially described in the context of wireless communications systems. Aspects of the disclosure are additionally described in the context of process flows. Aspects of the disclosure are further illustrated by and described with reference to apparatus diagrams, system diagrams, and flowcharts that relate to location-based service access for V2X systems.

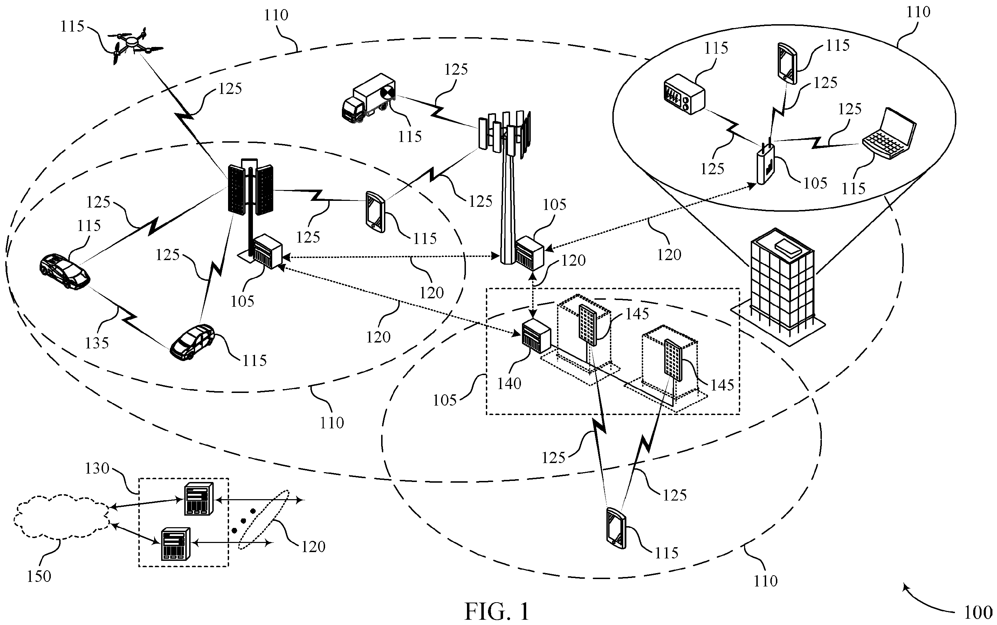

**FIG. 1** illustrates an example of a wireless communications system 100 that supports location-based service access for V2X systems in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

The time intervals for the base stations 105 or the UEs 115 may be expressed in multiples of a basic time unit which may, for example, refer to a sampling period of *Tₛ* = 1/(Δ*f*_{*m*ax} · *N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a D2D communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using V2X communications, V2V communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as RSUs, or with the network via one or more network nodes (e.g., base stations 105) using vehicle-to-network (V2N) communications, or with both.

V2X communications may utilize sidelinks, access links, or both. For example, a vehicle may communicate with an RSU over a PC5 link. Additionally, or alternatively, a vehicle may communicate with (e.g., access) a network (e.g., the core network 130) over a Uu link (e.g., with a base station 105). A PC5 link may be associated with a relatively shorter communication range (e.g., 300 meters or less, or some other communication range) and a relatively limited bandwidth (e.g., 20 MHz, or some other bandwidth) compared to a Uu link. However, a PC5 link may be associated with a low latency, for example, based on a close proximity of devices communicating over the PC5 link. A Uu link may have an unlimited communication range (e.g., based on communications being routed through a network to any base station 105 in the world) and may typically have a higher bandwidth compared to a PC5 link (e.g., 40 MHz, 80 MHz, 100 MHz, or some bandwidth higher than 20 MHz). However, latency and proximity requirements for communications over a Uu link may be less stringent compared to a PC5 link (e.g., based on potentially being routed through a network).

In some examples, a PC5 link for a vehicle may be "always on" while the vehicle is traveling. That is, the vehicle may continuously monitor for messages received over a PC5 link while traveling. Accordingly, upon entering a coverage area associated with an RSU (e.g., a geographic coverage area 110 of the RSU), the vehicle may receive any messages broadcast by the RSU over the PC5 link (e.g., without prior coordination between the RSU and the vehicle).

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 MHz to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The wireless communications system 100 may support the communication of location-based information to a UE 115. Examples of location-based information may include SPaT information, map information, geo-protected information, and commercial information, among other types of location-based information.

SPaT information may include signal, phase, and timing data for one or more intersections. For example, SPaT information may include traffic light information for the one or more intersections, such as a timing of traffic lights, a condition of traffic lights (e.g., green light, red light, yellow light, etc.), or other traffic light information. SPaT information may also include information such as a quantity of vehicles at or near a given intersection, a speed of vehicles at or near the intersection, lane information (e.g., a quantity of lanes of a road), or other road details. In some examples, SPaT information may also include green light optimized speed advisory (GLOSA) information.

Map information may include map data for a specific region or geographic area. The map data may include geometric data associated with intersections, roadways, highways, etc. For example, the map data may include a quantity of lanes, a size of a lane, a size of a road, a size of an intersection, locations and dimensions of buildings at or near a road or intersection, locations and dimensions of other objects at or near a road or intersection (e.g., lamp posts, sidewalks, benches, etc.), among other geometric data for a specific region or geographic area.

Geo-protected information may include information that is specific to a region or a geographic area and it may vary from region to region or geographic area to geographic area. In some examples, geo-protected information may be private to the region or geographic area. For example, the geo-protected information may be unavailable to UEs 115 outside of the region or geographic area. Some examples of geo-protected information include local traffic events, temporary local traffic control information, local road conditions, hazardous location warnings, construction information, tolling information, and travel information (e.g., information related to restaurants, gas stations, etc.), among other types of geo-protected information.

Commercial information may include information associated with one or more commercial entities (e.g., businesses) of a region or geographic area. For example, commercial information may include locations of commercial entities, a type of a commercial entity (e.g., a restaurant, an outlet, a gas station, a tourist attraction, or some other type of commercial entity), and discounts, coupons, or promotions associated with products sold by the commercial entities. In some examples, commercial information provided by an RSU may include a code associated with a particular commercial entity which may be used to access additional commercial information associated with the commercial entity (e.g., a location of the commercial entity, a type of the commercial entity, discounts, coupons, and promotions associated with the commercial entity) from a server.

Various aspects of the described techniques support enabling UE access to location-based services (e.g., via local servers, MEC servers) by providing network addresses (e.g., local server addresses, MEC server addresses) to a UE 115 via a sidelink between the UE 115 and an RSU. For example, an RSU may broadcast a sidelink message (e.g., over a PC5 link) that includes a network address for a location-based service. A UE 115, such as a vehicle, may receive the sidelink message and may determine (e.g., and store) the indicated network address. The UE 115 may then access the location-based service over a connection with a base station 105 (e.g., an access link, a Uu link) using the network address and may receive (e.g., retrieve) location-based information from the location-based service over the connection.

The UE 115 may access the location-based service based on a location of the UE 115. For example, the UE 115 may enter or be located within a geographic area for which the location-based service provides location-based information and may access the location-based service and receive the location-based information based on entering or being located within the geographic area. Additionally, or alternatively, the UE 115 may access the location-based service based on a type of the location-based information. For example, the UE 115 may receive (e.g., via the sidelink message, via a second sidelink message) information associated with the location-based information. For instance, the sidelink message (e.g., or a second sidelink message) may indicate one or more SPaT configurations, a newest version number of map data for a region, that geo-protected information is provided within a particular region, commercial information, or a combination thereof. The UE 115 may use the indicated information associated with the location-based information in conjunction with the indicated network address to retrieve corresponding location-based information (e.g., SPaT information, map data, geo-protected information, additional commercial information) from the location-based service.

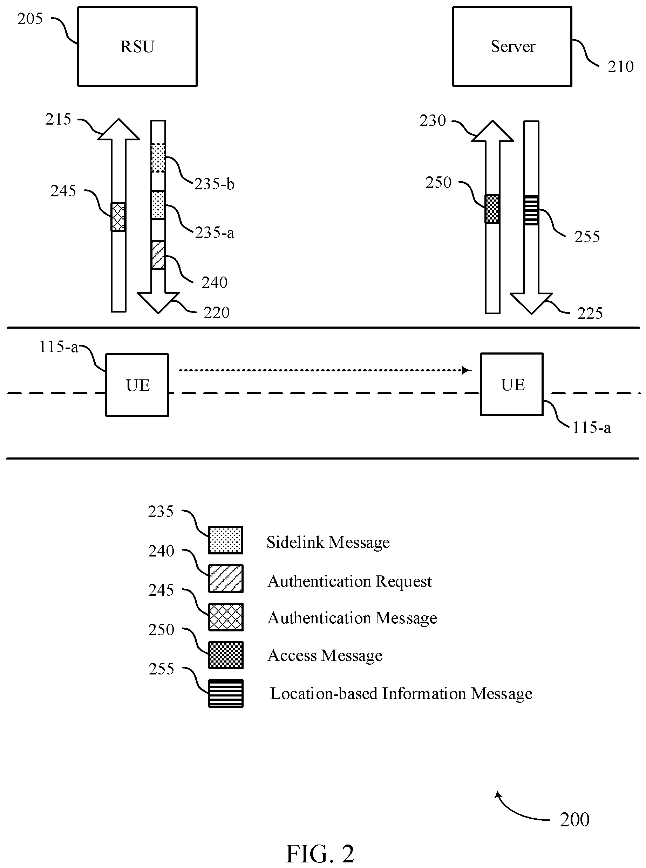

**FIG. 2** illustrates an example of a wireless communications system 200 that supports location-based service access for V2X systems in accordance with aspects of the present disclosure. The wireless communications system 200 may implement aspects of the wireless communications system 100 or may be implemented by aspects of the wireless communications system 100. For example, the wireless communications system 200 may include a UE 115-a, which may be an example of a UE 115 described with reference to FIG. 1. In some examples, the wireless communications system 200 may support one or more radio access technologies including 4G systems such as LTE systems, LTE-A systems, or LTE-A Pro systems, 5G systems which may be referred to as NR systems, or a combination of these or other radio access technologies.

The wireless communications system 200 may include an RSU 205 and may support communications between the UE 115-a and the RSU 205. For example, the RSU 205 may transmit messages to the UE 115-a over a channel 220, and the UE 115-a may transmit messages to the RSU 205 over a channel 215. In some examples, the channel 220 and the channel 215 may be examples of sidelinks (e.g., a D2D communication link 135, a PC5 link) over which the UE 115-a and the RSU 205 may directly communicate messages to each other. Here, the channel 220 and the channel 215 may be examples of a physical sidelink channel, such as a physical sidelink shared channel (PSSCH), a physical sidelink control channel (PSCCH), a physical sidelink feedback channel (PSFCH), or some other physical sidelink channel.

Additionally, the wireless communications system 200 may include a server 210 and may support communications between the UE 115-a and the server 210. In some examples, the server 210 may be an example of a local server, a central server, a national server, an MEC server, or a base station 105 described with reference to FIG. 1. The UE 115-a may transmit uplink messages to the server 210 over a channel 230, and the server 210 may transmit downlink messages to the UE 115-a over a channel 225. In some examples, the channel 225 and the channel 230 may be examples of access links (e.g., a communication link 125, a Uu link). Here, the channel 230 may be an example of a physical uplink channel, such as a physical uplink control channel (PUCCH), a physical uplink shared channel (PUSCH), a physical random access channel (PRACH), or some other physical uplink channel, and the channel 225 may be an example of a physical downlink channel, such as a physical downlink control channel (PDCCH), a physical downlink shared channel (PDSCH), a PRACH, a physical broadcast channel (PBCH), or some other physical downlink channel.

The wireless communications system 200 may support the communication of location-based information to the UE 115-a. For example, the UE 115-a may be a vehicle that utilizes V2X communications. The vehicle may use location-based information to improve the functionality and safety of the vehicle. For example, location-based information may include SPaT information, map information, geo-protected information, and commercial information, among other types of location-based information, which may support autonomous driving, improved safety, and business transactions, among other applications of location-based information. In some examples, the RSU 205 may broadcast location-based information to the UE 115-a over the channel 220. In some other examples, the UE 115-a may pull the server 210 to retrieve location-based information from the server 210. For example, the server 210 may be an example of a location-based service through which the UE 115-a may retrieve location-based information.

In order to access the server 210 to retrieve location-based information, the UE 115-a may use a network address of the server 210 (e.g., a server address of the server 210, a URL of the server 210). For example, the network address may enable to the UE 115-a to connect and establish communications with the server 210. However in some cases, the UE 115-a may not store or otherwise know the network address of the server 210 and may thus be unable to access the server 210 to retrieve location-based information.

To enable access to the server 210 by the UE 115-a, the RSU 205 may indicate the network address of the server 210 to the UE 115-a. For example, the RSU 205 may communicate with a network (e.g., a core network 130), which may provide the RSU 205 with one or more network addresses of one or more servers (e.g., the server 210, additional servers 210 (not shown)). Accordingly, if any of the network addresses of the one or more servers changes, or if additional servers are built or configured to be associated with the RSU 205, the network may provide current network addresses to the RSU 205.

The RSU 205 may generate an indication of the one or more network addresses and may broadcast a sidelink message 235-a that includes the indication of the one or more network addresses such that any UE 115 within a coverage area of the RSU 205 (e.g., the UE 115-a) may receive the sidelink message 235-a. In some examples, the RSU 205 may continuously broadcast the sidelink message 235-a. In some other examples, the RSU 205 may begin broadcasting the sidelink message 235-a in response to detecting that one or more UEs 115 enter the coverage area of the RSU 205. In still some other examples, the RSU 205 may transmit an authentication request 240 that requests the UE 115-a to transmit an authentication code associated with the UE 115-a to the RSU 205. The UE 115-a may receive the authentication request 240 and may transmit the authentication code to the RSU 205 in an authentication message 245 in response to the authentication request 240. The RSU 205 may determine whether the UE 115-a is authorized to receive the sidelink message 235-a (e.g., by comparing the authentication code to a set of authorized authentication codes) and may transmit the sidelink message 235-a if the UE 115-a is authorized.

The UE 115-a may receive the sidelink message 235-a and may determine and/or store the one or more network addresses. For example, as the UE 115-a travels, the UE 115-a may enter, be located within, or pass through a coverage zone of the RSU 205 and may receive the sidelink message 235-a over a PC5 link between the RSU 205 and the UE 115-a. Based on a location of the UE 115-a, the UE 115-a may access (e.g., connect with) the server 210 using the network address that corresponds to the server 210. For example, the one or more servers corresponding to the one or more network addresses (e.g., the server 210) may each be associated with a respective geographic area. In order to access a particular server, the UE 115-a may identify the server corresponding to the location of the UE 115-a and may use a corresponding network address (e.g., provided by the RSU 205) to access the server. In the example of FIG. 2, the UE 115-a may identify that the location of the UE 115-a is within the geographic area associated with the server 210 and may use the network address corresponding to the server 210 to access the server 210.

To access the server 210, the UE 115-a transmit an access message 250 that includes the network address of the server 210. In some examples, the UE 115-a may transmit the access message 250 to a base station 105 (not shown), which may forward the access message 250 to the server 210. The access message 250 may request for the server 210 to transmit location-based information to the UE 115-a. In response to receiving the access message 250, the server 210 may transmit (e.g., via a base station 105) a location-based information message 255 to the UE 115-a that includes the requested location-based information.

In some examples, the UE 115-a may access the server 210 based on a type of the location-based information (e.g., requested by the UE 115-a). Additionally, or alternatively, the UE 115-a may access the server 210 based on information transmitted (e.g., broadcast) by the RSU 205 that is associated with the location-based information. For example, to support the retrieval of SPaT information, the RSU 205 may indicate (e.g., via the sidelink message 235-a, via a sidelink message 235-b) a first set of one or more locations (e.g., geographic areas) at which the UE 115-a may access the server 210 (e.g., and one or more other servers) to retrieve the SPaT information and a second set of one or more locations (e.g., geographic areas) at which the UE 115-a may receive the SPaT information from one or more other RSUs 205 (e.g., over PC5 links). Accordingly, the UE 115-a may compare its location to the first set of one or more locations and the second set of one or more locations to determine whether to access the server 210 to receive (e.g., retrieve) the SPaT information.

Additionally, or alternatively, to support the retrieval of map information (e.g., map data for a region), the RSU 205 may indicate (e.g., via the sidelink message 235-a, via a sidelink message 235-b) a first version number associated with the map information (e.g., a most recent or newest version number of the map information). The UE 115-a may compare the first version number to a second version number associated with the map information (e.g., a previous or older version number of the map information) stored at the UE 115-a. If the first version number and the second version number are the same, the UE 115-a may determine that the map information stored at the UE 115-a is up to date and may refrain from accessing the server 210 to retrieve the map information. Alternatively, if the first version number and the second version number are different, the UE 115-a may access the server 210 to retrieve the updated or newer map information.

Additionally, or alternatively, to support the retrieval of geo-protected information, the RSU 205 may indicate (e.g., via the sidelink message 235-a, via a sidelink message 235-b) whether geo-protected information is provided in a particular region. If the UE 115-a is within the region (e.g., a region associated with the server 210), the UE 115-a may access the server 210 to retrieve the geo-protected information.

Additionally, or alternatively, to support the retrieval of commercial information, the RSU 205 may include (e.g., via the sidelink message 235-a, via a sidelink message 235-b) second commercial information that may be used by the UE 115-a to retrieve the commercial information. For example, the RSU 205 may indicate a code associated with a business in addition to the network address. The UE 115-a may use the code (e.g., include the code in the access message 250) when accessing the server 210 in order to retrieve (e.g., obtain) additional commercial information associated with the business, such as discounts, coupons, promotions, etc.

Additionally, or alternatively, to support accessing services that are relevant to the UE 115-a and avoiding accessing services that are irrelevant to the UE 115-a, the RSU 205 may include (e.g., via the sidelink message 235-a, via a sidelink message 235-b) a service mask field (e.g., a ServiceMask field) to indicate a service type or a service category associated with a location-based service or location-based information. In other words, the service mask field may indicate a service type or category to be sent to the UE 115-a, which, because the location-based service or location-based information may be associated with an information service (and not a safety critical service), may enable the UE 115-a to avoid receiving or decoding too may messages or accessing service types that are irrelevant to the UE 115-a. In some aspects, for example, an end user of the UE 115-a may be interested in a first service type and such a first service type may accordingly be understood or referred to as a service type that is relevant to the UE 115-a. Similarly, an end user of the UE 115-a may not be interested in a second service type and such a second service type may accordingly be understood or referred to as a service type that is irrelevant to the UE 115-a, even if the second service type is otherwise compatible with the UE 115-a (e.g., such that the UE 115-a is capable of supporting the second service type).

In some examples, the UE 115-a may receive or be preconfigured with a first set of one or more location-based services, the service mask field may indicate a second set of one or more location-based services, and the UE 115-a may perform filtering and processing to select or otherwise pick out which services to access in accordance with which services of the second set of one or more location-based services are included in the first set of one or more location-based services. As such, the UE 115-a may receive the service mask field and may perform filtering such that the UE 115-a opts into services that are relevant to, supported by, or otherwise associated with the UE 115-a (or an end user) and avoids accessing services that are irrelevant to or unsupported by the UE 115-a (or an end user). This filtering may effectively promote location-based services or location-based information that the UE 115-a (or an end user) is interested in. If there is no service in the second set of one or more location-based services indicated by the service mask field that the UE 115-a (or an end user) is interested in, the UE 115-a or an application at the UE 115-a may ignore the whole message. In an example, the service mask field may include a set of bits (e.g., a bit string) and different values of set of bits may indicate difference service types. For example, a bit string value of 0 may indicate an SPaT service, a bit string value of 1 may indicate a map service, a bit string value of 2 may indicate a regional service, a bit string value of 3 may indicate a value add service, and a bit string value of 4 may indicate a sensor sharing service.

Additionally, or alternatively, to support accessing a location-based service that is associated with an application supported by the UE 115-a and to avoid attempting to access a location-based service that is associated with an application that is not supported by the UE 115-a, the RSU 205 may include (e.g., via the sidelink message 235-a, via a sidelink message 235-b) an application description field (e.g., an AppDescription field) to uniquely identify a Uu application corresponding to a location-based service and Uu-side information associated with the Uu application. For example, because a PC5-side link may be constrained to providing an access method (e.g., an IP address or a URL), the UE 115-a may be unaware of information associated with a subsequent Uu application flow to the terminal side (which the UE 115 may use, along with an access method, to access and retain the application and location-based service), the RSU 205 may indicate such Uu application flow information to the UE 115-a via the application description field.

The application description field may include or be similar to a hash code that represents the Uu side information (e.g., all the Uu side information associated with a corresponding Uu application). As such, if the UE 115-a is able to match the information provided via the application description field to a configuration of the UE 115-a, the UE 115-a may determine that the corresponding Uu application is supported by the UE 115-a and the UE 115-a may follow the corresponding Uu application flow after initial access. Alternatively, if the UE 115-a is unable to match the information provided via the application description field to a configuration of the UE 115-a, the UE 115-a may determine that the corresponding Uu application is not supported by the UE 115-a and the UE 115-a may ignore the access information (because the UE 115-a would be unable to follow or support the subsequent application flow). In some aspects, the application description field may include two parts. A first part may include a code and a second part may include some text description such that the UE 115-a may use either or both of the first part or the second part to do the matching according to the design of each Uu application. In an example, the first part of the application description field may include eight bits that indicate a hash code which uniquely identifies a Uu application and the second part of the application description field may a text string of up to 512 bits that indicate a text description of the application.

Accordingly, the RSU 205 may transmit the sidelink message 235-a to facilitate the accessing of multiple types of location-based information from the server 210. The sidelink message 235-a may include multiple parameters for indicating, for example, the first set of one or more locations, the second set of one or more locations, the first version number, whether geo-protected information is provided in a particular region, commercial information, or a combination thereof. An example of the sidelink message 235-a including these parameters is provided below:

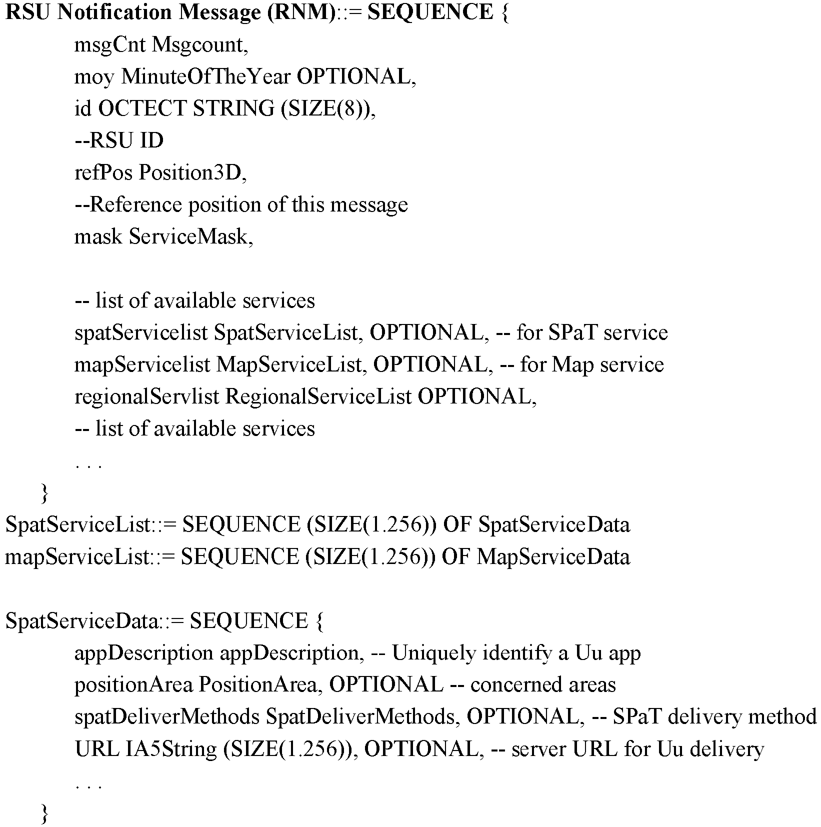

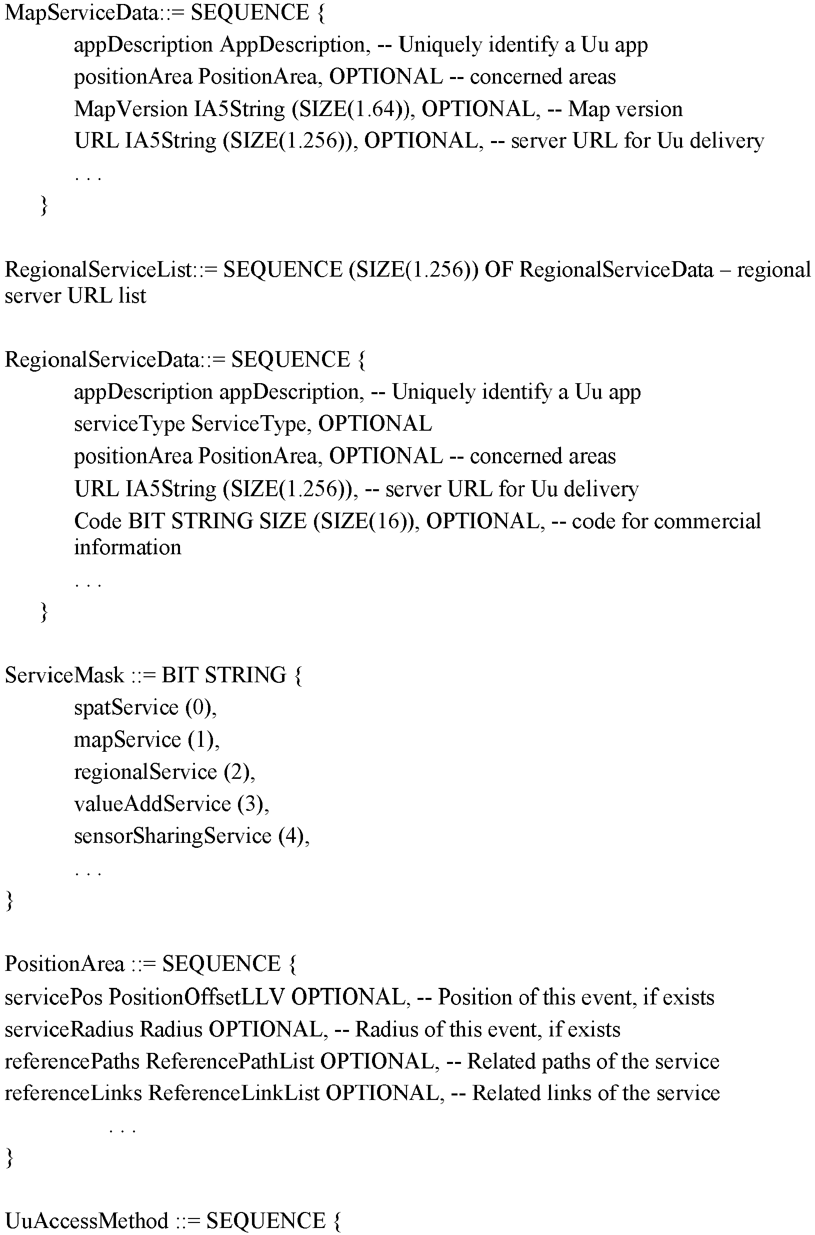

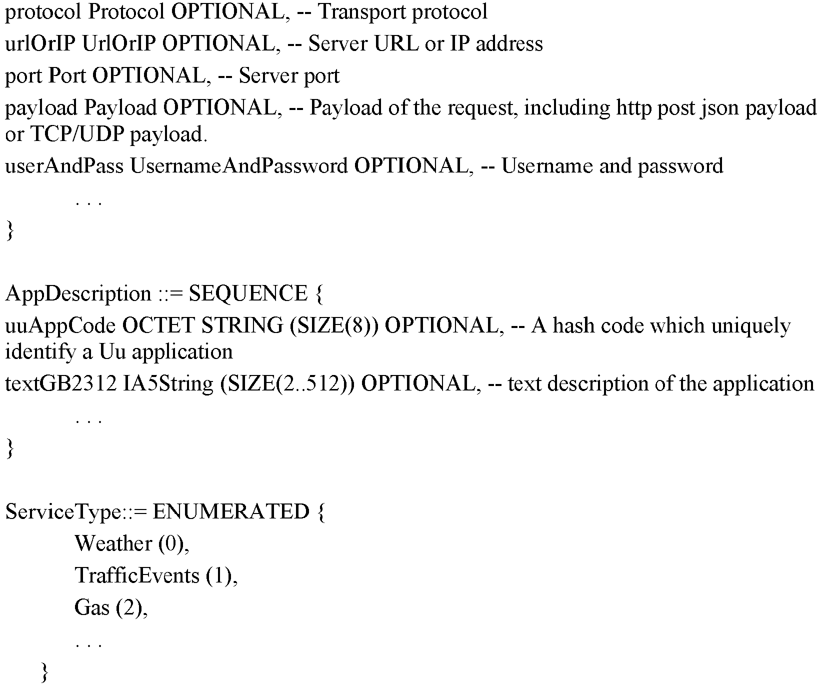

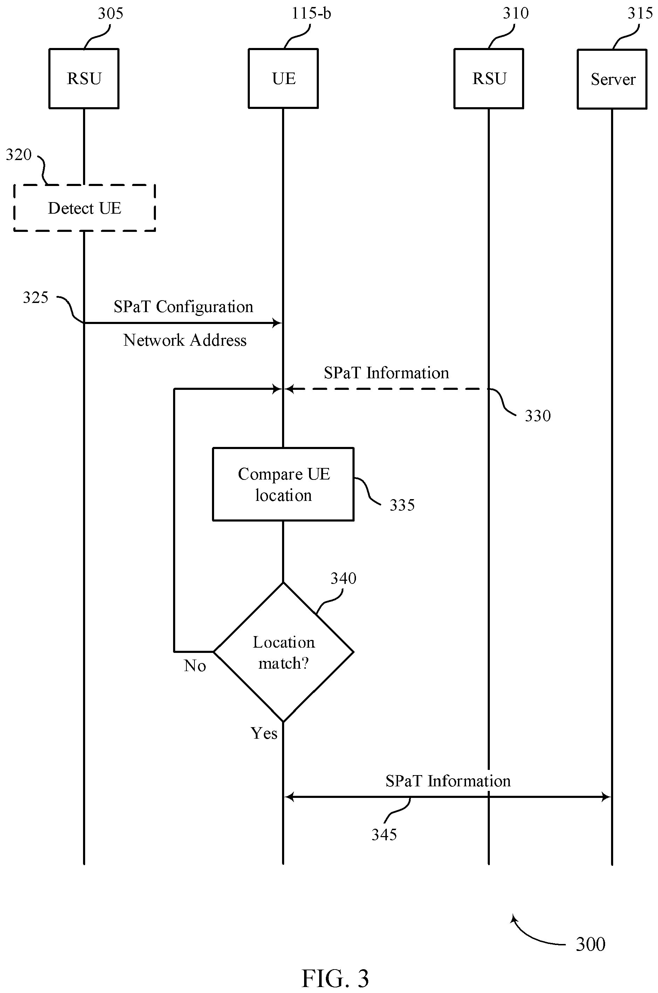

**FIG. 3** illustrates an example of a process flow 300 that supports location-based service access for V2X systems in accordance with aspects of the present disclosure. In some examples, the process flow 300 may be implemented by aspects of the wireless communications systems 100 and 200 as described with reference to FIGs. 1 and 2. For example, the process flow 300 may be implemented by an RSU 305, a UE 115-b, an RSU 310, and a server 315 to support location-based service access using RSU provided network addresses. The process flow 300 may further be implemented by the RSU 305, the UE 115-b, the RSU 310, and the server 315 to provide improvements to location-based services, location-based information delivery, network discovery and selection, traffic steering, connectivity, latency, spectral efficiency, storage utilization, resource usage, and processing capability, among other benefits.

The RSU 305, the UE 115-b, the RSU 310, and the server 315 may be respective examples of an RSU, a UE 115, and a server 210 described with reference to FIGs. 1 and 2. In the following description of the process flow 300, the operations between the RSU 305, the UE 115-b, the RSU 310, and the server 315 may be communicated in a different order than the example order shown, or the operations performed by the RSU 305, the UE 115-b, the RSU 310, and the server 315 may be performed in different orders or at different times. Some operations may also be omitted from the process flow 300, and other operations may be added to the process flow 300.

It is noted that, while FIG. 3 depicts the exchange of information related to SPaT information, the principles disclosed herein may be adapted and applied for the exchange of any type of location-based information.

At 320, the RSU 305 may optionally detect that the UE 115-b enters or is located within a coverage area of the RSU 305.

At 325, the RSU 305 may broadcast a SPaT configuration and one or more network addresses to the UE 115-b via a sidelink. For example, the RSU 305 may broadcast one or more sidelink messages that include the SPaT configuration and the one or more network addresses. A first network address of the one or more network addresses may be associated with the server 315. Additional network addresses of the one or more network addresses may each be associated with a different server 315 (not shown). In some examples, the RSU 305 may continuously broadcast the one or more sidelink messages (e.g., even if a UE 115 is not located within the coverage area of the RSU 305). In some other examples, the RSU 305 may begin broadcasting the one or more sidelink messages in response to detecting that the UE 115-b enters or is located within the coverage area of the RSU 305.

The SPaT configuration may indicate a first set of one or more locations (e.g., geographic areas) where the UE 115-b may access the server 315 (e.g., or other servers 315) to retrieve SPaT information. The SPaT configuration may additionally indicate a second set of one or more locations (e.g., geographic areas) where the SPaT information may be broadcast by an RSU 310 (e.g., or other RSUs 310).

At 330, the UE 115-b may optionally receive the SPaT information from the RSU 310. For example, the RSU 310 may broadcast sidelink messages that include the SPaT information to a coverage area associated with the RSU 310. If a location of the UE 115-b matches a location of the second set (e.g., is within a geographic area of the second set), the UE 115-b may receive the SPaT information from the RSU 310. Here, the UE 115-b may refrain from accessing the server 315 to retrieve the SPaT information as the UE 115-b (e.g., to avoid redundantly receiving the SPaT information).

At 335, the UE 115-b may compare its location to the first set. At 340, the UE 115-b may determine whether its location matches any of the first set based on the comparison. For example, if the location of the UE 115-b is within a geographic area associated with a location of the first set, the UE 115-b may determine that its location matches the location of the first set. Alternatively, if the location of the UE 115-b is outside of any of the geographic areas associated with the first set, the UE 115-b may determine that its location fails to match any of the locations of the first set.

If, at 340, the UE 115-b determines that its location matches a location of the first set, at 345, the UE 115-b retrieve the SPaT information from the server 315 using the first network address. For example, the UE 115-b may access the server 315 using the first network address and request the server 315 to transmit the SPaT information. In response, the server 315 may transmit the SPaT information to the server UE 115-b.

Alternatively, if, at 340, the UE 115-b determines that its location fails to match any of the locations of the first set, the UE 115-b may receive the SPaT information from the RSU 310. For example, if the UE 115-b determines that its location fails to match any of the locations of the first set, the UE 115-b may assume that its location matches a location of the second set. Thus, the UE 115-b may receive the SPaT information from the RSU 310 as described above. Alternatively, the UE 115-b may compare its location to the second set and determine whether its location matches a location of the second set. Here, the UE 115-b may determine that its location matches a location of the second set and may receive the SPaT information from the RSU 310.

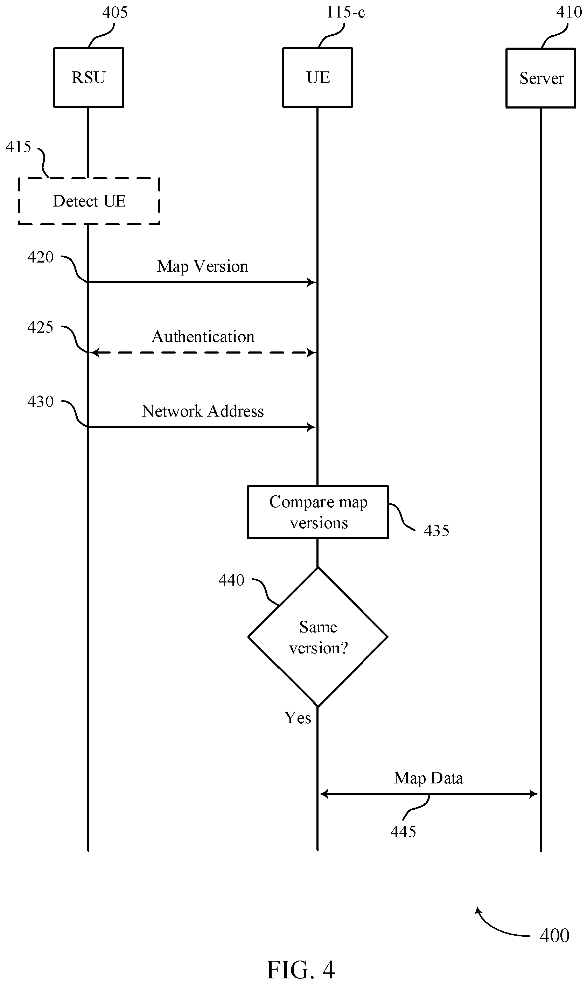

**FIG. 4** illustrates an example of a process flow 400 that supports location-based service access for V2X systems in accordance with aspects of the present disclosure. In some examples, the process flow 400 may be implemented by aspects of the wireless communications systems 100 and 200 as described with reference to FIGs. 1 and 2. For example, the process flow 400 may be implemented by an RSU 405, a UE 115-c, and a server 410 to support location-based service access using RSU provided network addresses. The process flow 400 may further be implemented by the RSU 405, the UE 115-c, and the server 410 to provide improvements to location-based services, location-based information delivery, network discovery and selection, traffic steering, connectivity, latency, spectral efficiency, storage utilization, resource usage, and processing capability, among other benefits.

The RSU 405, the UE 115-c, and the server 410 may be respective examples of an RSU, a UE 115, and a server described with reference to FIGs. 1 through 3. In the following description of the process flow 400, the operations between the RSU 405, the UE 115-c, and the server 410 may be communicated in a different order than the example order shown, or the operations performed by the RSU 405, the UE 115-c, and the server 410 may be performed in different orders or at different times. Some operations may also be omitted from the process flow 400, and other operations may be added to the process flow 400.

It is noted that, while FIG. 4 depicts the exchange of information related to map information, the principles disclosed herein may be adapted and applied for the exchange of any type of location-based information.

At 415, the RSU 405 may optionally detect that the UE 115-c enters or is located within a coverage area of the RSU 405.

At 420, the RSU 405 may broadcast a first version number of map data for a region (e.g., or geographic area) to the UE 115-c via a sidelink (e.g., a PC5 link). For example, the RSU 405 may broadcast a first sidelink message that includes the first version number. In some examples, the first version number may correspond to a newest or most recent version of the map data. In some examples, the RSU 405 may continuously broadcast the first sidelink message (e.g., even if a UE 115 is not located within the coverage area of the RSU 405). In some other examples, the RSU 405 may begin broadcasting the first sidelink message in response to detecting that the UE 115-c enters or is located within the coverage area of the RSU 405.

At 425, the RSU 405 may optionally determine whether the UE 115-c is authorized to receive a network address associated with the server 410. For example, in some cases, the server 410 (e.g., a regional government of the server 410) may limit access to the server 410 to specific UEs 115. The RSU 405 may transmit a request for an authentication code associated with the UE 115-c, and the UE 115-c may transmit the authentication code to the RSU 405 in response to receiving the request. The RSU 405 may determine if the UE 115-c is authorized to access the server 410, for example, by comparing the authentication code to a set of one or more authentication codes stored at the RSU 405 (e.g., and provided by the server 410). If the authentication code matches one of the set of authentication codes, the RSU 405 may determine that the UE 115-c is authorized to access the server 410.

At 430, the RSU 405 may broadcast a network address associated with the server 410 to the UE 115-c via a sidelink (e.g., a PC5 link). For example, the RSU 405 may broadcast a second sidelink message that includes the network address. In some examples, the RSU 405 may broadcast the second sidelink message in response to determining that the UE 115-c is authorized to receive the network address. In some cases, the second sidelink message and the first sidelink message may be a same sidelink message. In some other cases (e.g., if the RSU 405 authenticates the UE 115-c), the second sidelink message and the first sidelink message may be different sidelink messages. In some examples, the RSU 405 may continuously broadcast the second sidelink message. In some other examples, the RSU 405 may begin broadcasting the second sidelink message in response to detecting that the UE 115-c enters or is located within the coverage area of the RSU 405.

At 435, the UE 115-c may compare the first version number to a second version number of the map data stored at the UE 115-c. For example, the UE 115-c may store map data for the region that corresponds to the second version number and may compare the first version number to second version number.

At 440, the UE 115-c may determine whether the first version number matches the second version number based on the comparison. For example, in some cases, the second version number may correspond to a previous or older version of the map data. For instance, at some time after downloading and storing the map data corresponding to the second version number, the map data may be changed or updated and may be assigned a new version number (e.g., the first version number). Accordingly, if the UE 115-c determines that the first version number and the second version number are different, the UE 115-c may determine that it stores an old (e.g., outdated) version of the map data. Alternatively, if the UE 115-c determines that the first version number and the second version number are the same, the UE 115-c may determine that its map data is current (e.g., up to date).

If, at 440, the UE 115-c determines that the first version number and the second version number are different, the UE 115-c may use the network address to access the server 410 and request for the server 410 to transmit, at 445, the new (e.g., updated) map data corresponding to first version number. In some examples, the UE 115-c may transmit the first version number to the server 410 so that the server 410 may determine which version of the map data to transmit to the UE 115-c at 445. In some other examples, the server 410 may transmit, at 445, the newest version of the map data in response to a request for map data. In still some other examples, the UE 115-c may transmit the second version number to the server 410. This may enable the server 410 to determine differences in the map data between the first version number and the second number. Here, the server 410 may transmit updates to the map data corresponding to the differences, thereby reducing a quantity of map data transmitted to the UE 115-c.

In some examples, the UE 115-c may not store any map data for the region and may thus not store the second version number. Here, the UE 115-c may access the server 410 to retrieve the map data based on determining that it does not store any map data for the region (e.g., without comparing any version numbers of the map data).

Alternatively, if at 440, the UE 115-c determines that its map data is current, the UE 115-c may refrain from accessing the server 410 to retrieve the map data.

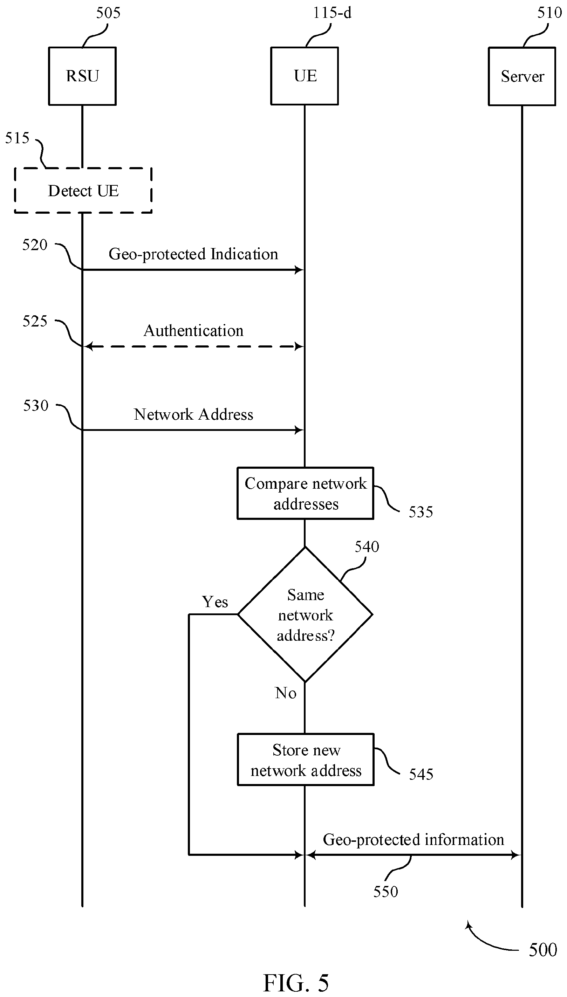

**FIG. 5** illustrates an example of a process flow 500 that supports location-based service access for V2X systems in accordance with aspects of the present disclosure. In some examples, the process flow 500 may be implemented by aspects of the wireless communications systems 100 and 200 as described with reference to FIGs. 1 and 2. For example, the process flow 500 may be implemented by an RSU 505, a UE 115-d, and a server 510 to support location-based service access using RSU provided network addresses. The process flow 500 may further be implemented by the RSU 505, the UE 115-d, and the server 510 to provide improvements to location-based services, location-based information delivery, network discovery and selection, traffic steering, connectivity, latency, spectral efficiency, storage utilization, resource usage, and processing capability, among other benefits.

The RSU 505, the UE 115-d, and the server 510 may be respective examples of an RSU, a UE 115, and a server described with reference to FIGs. 1 through 4. In the following description of the process flow 500, the operations between the RSU 505, the UE 115-d, and the server 510 may be communicated in a different order than the example order shown, or the operations performed by the RSU 505, the UE 115-d, and the server 510 may be performed in different orders or at different times. Some operations may also be omitted from the process flow 500, and other operations may be added to the process flow 500.

It is noted that, while FIG. 5 depicts the exchange of information related to geo-protected information, the principles disclosed herein may be adapted and applied for the exchange of any type of location-based information.

At 515, the RSU 505 may optionally detect that the UE 115-d enters or is located within a coverage area of the RSU 505.

At 520, the RSU 505 may broadcast, via a sidelink (e.g., a PC5 link) an indication of whether geo-protected information is provided in a particular region. For example, the RSU 505 may broadcast a first sidelink message that indicates one or more regions in which a network associated with the region provides geo-protected information. In some examples, the RSU 505 may continuously broadcast the first sidelink message (e.g., even if a UE 115 is not located within the coverage area of the RSU 505). In some other examples, the RSU 405 may begin broadcasting the first sidelink message in response to detecting that the UE 115-c enters or is located within the coverage area of the RSU 505.

At 525, the RSU 505 may optionally determine whether the UE 115-d is authorized to receive a network address associated with the server 510. For example, in some cases, the server 510 (e.g., a regional government of the server 510) may limit access to the server 510 to specific UEs 115. The RSU 505 may transmit a request for an authentication code associated with the UE 115-d, and the UE 115-d may transmit the authentication code to the RSU 505 in response to receiving the request. The RSU 505 may determine if the UE 115-d is authorized to access the server 410, for example, by comparing the authentication code to a set of one or more authentication codes stored at the RSU 505 (e.g., and provided by the server 510). If the authentication code matches one of the set of authentication codes, the RSU 505 may determine that the UE 115-d is authorized to access the server 510.

At 530, the RSU 505 may broadcast a first network address associated with the server 510 to the UE 115-d via a sidelink (e.g., a PC5 link). For example, the RSU 505 may broadcast a second sidelink message that includes the first network address. In some examples, the RSU 505 may broadcast the second sidelink message in response to determining that the UE 115-d is authorized to receive the first network address. In some cases, the second sidelink message and the first sidelink message may be a same sidelink message. In some other cases (e.g., if the RSU 505 authenticates the UE 115-d), the second sidelink message and the first sidelink message may be different sidelink messages. In some examples, the RSU 505 may continuously broadcast the second sidelink message. In some other examples, the RSU 505 may begin broadcasting the second sidelink message in response to detecting that the UE 115-d enters or is located within the coverage area of the RSU 505.

At 535, the UE 115-c may compare the first network address to a second network address associated with the server 510 stored at the UE 115-d.

At 540, the UE 115-c may determine whether the first version number matches the second version number based on the comparison. For example, in some cases, the second network address may correspond to a previous or older network address associated with the server 510. For instance, at some time after storing the second network address, the network address of the server 510 may be changed or updated and may be assigned a new network address (e.g., the first network address). Accordingly, if the UE 115-d determines that the first network address and the second network address are different, the UE 115-d may determine that it stores an old (e.g., outdated) network address for the server 510. Alternatively, if the UE 115-d determines that the first network address and the second network address are the same, the UE 115-d may determine that its network address is the current network address of the server 510.

If, at 540, the UE 115-d determines that the first network address and the second network address are different, the UE 115-d may update and store, at 545, the first network address as the network address for the server 510. In some examples, the UE 115-d may not store any network address for the server 510 and may thus not store the second network address. Here, the UE 115-d may store, at 545, the first network address as the network address for the server 510 (e.g., without comparing any network addresses).

At 550, the UE 115-d may access the server 510 using the first network address to retrieve the geo-protected information. For example, the UE 115-d may use the first network address to transmit a request for the geo-protected information to the server 510. In response, the server 510 may transmit the geo-protected information to the UE 115-d.

In some examples, at 540, the UE 115-d may determine that the first network address and the second network address are the same (e.g., the UE 115-d stores the current network address). Here, the UE 115-d may skip updating or storing the second network address (e.g., as it is the current network address) and may access the server 510 using the first network address to retrieve the geo-protected information.

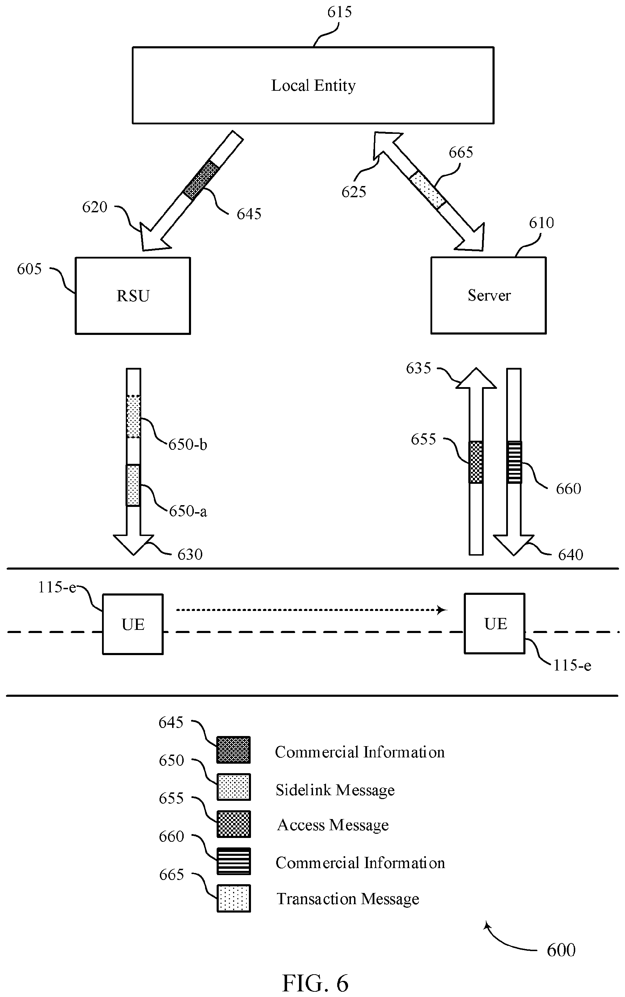

**FIG. 6** illustrates an example of a wireless communications system 600 that supports location-based service access for V2X systems in accordance with aspects of the present disclosure. The wireless communications system 600 may implement aspects of the wireless communications systems 100 and 200 or may be implemented by aspects of the wireless communications systems 100 and 200 as described with reference to FIGs. 1 and 2. For example, the wireless communications system 600 may include an RSU 605, a UE 115-e, and a server 610, which may be examples of the corresponding devices described with reference to FIGs. 1 through 5. In some examples, the wireless communications system 600 may support one or more radio access technologies including 4G systems such as LTE systems, LTE-A systems, or LTE-A Pro systems, 5G systems which may be referred to as NR systems, or a combination of these or other radio access technologies.

The wireless communications system 600 may support communications between the UE 115-e and the RSU 605 and between the UE 115-e and the server 610. For example, the RSU 605 may transmit messages to the UE 115-e over a channel 630, which may be an example of a channel 220 described with reference to FIG. 2. Additionally, the UE 115-e and the server 610 may communicate messages over a channel 635 and a channel 640, which may be examples of a channel 230 and a channel 225, respectively.

The wireless communications system 600 may additionally support communications between a local entity 615 and the RSU 605 and between the local entity 615 and the server 610. For example, the local entity 615 may transmit messages to the RSU 605 over a channel 620, which may be an example of a communication link 125 as described with reference to FIG. 1. Additionally, the local entity 615 may communicate messages with the server 610 over a channel 625, which may be an example of a communication link 125 as described with reference to FIG. 1. In some aspects, the server 610 and the local entity 615 may exchange (e.g., transmit or receive) one or more transaction messages 665 over the channel 625.

The wireless communications system 600 may support providing commercial information to a UE 115-e. For example, the local entity 615 may be an example of a commercial entity, such as a local business. The local entity 615 may transmit commercial information 645 to the RSU 605 in order to, for example, promote the local entity 615 (e.g., attract customers to the local entity 615) and provide the commercial information 645 to local UEs 115. In some examples, the commercial information 645 may include a location of the local entity 615, a network address of a server associated with the local entity 615 (e.g., the server 610), one or more discounts, coupons, or promotions for products sold by the local entity 615, or a combination thereof. Additionally, or alternatively, the commercial information 645 may include a code associated with the local entity 615 that may provide access to the one or more discounts, coupons, or promotions (e.g., via a server 610).

The RSU 605 may broadcast a sidelink message 650-a to the UE 115-e that includes the commercial information 645. In some examples, the network address of the server 610 may be included in the sidelink message 650-a. In some other examples, the RSU 605 may broadcast a sidelink message 650-b that includes the network address of the server 610.

The UE 115-e may receive the sidelink message 650-a (e.g., and the sidelink message 650-b) and may store the commercial information 645 and the network address of the server 610. In some examples, the UE 115-e may access the server 610 to retrieve additional commercial information 660 from the server 610 using the network address. For example, if the commercial information includes the code for accessing the one or more discounts, coupons, or promotions, the UE 115-e may use the network address to transmit an access message 655 to the server 610 that includes the code. In response to the access message 655, the server 610 may transmit the commercial information 660 that includes the one or more discounts, coupons, or promotions and, in some examples, the location of the local entity 615.

The UE 115-e may perform a transaction with the local entity 615 using the commercial information 645 and/or the commercial information 660. For example, a user of the UE 115-e (e.g., a driver of a vehicle) may purchase a product from the local entity 615 using the commercial information 645 and or the commercial information 660. To perform the transaction, a V2X application of the UE 115-e may transmit the one or more discounts, coupons, or promotions to the server 610 which may, in turn, facilitate the transaction between the UE 115-e and the local entity 615. In some examples, the server 610 notifies a central server (e.g., a central cloud) of the transaction, for example, so that an operator of the RSU 605 or the server 610 may share a portion of the revenue from the transaction.

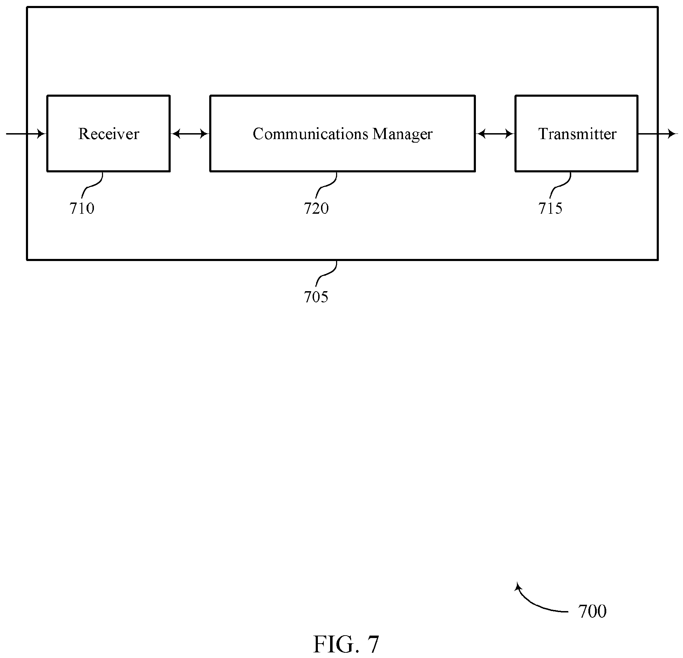

**FIG. 7** shows a block diagram 700 of a device 705 that supports location-based service access for V2X systems in accordance with aspects of the present disclosure. The device 705 may be an example of aspects of a UE 115 as described herein. The device 705 may include a receiver 710, a transmitter 715, and a communications manager 720. The device 705 may also include a processor. Each of these components may be in communication with one another (e.g., via one or more buses).

The receiver 710 may provide a means for receiving information such as packets, user data, control information, or any combination thereof associated with various information channels (e.g., control channels, data channels, information channels related to location-based service access for V2X systems). Information may be passed on to other components of the device 705. The receiver 710 may utilize a single antenna or a set of multiple antennas.

The transmitter 715 may provide a means for transmitting signals generated by other components of the device 705. For example, the transmitter 715 may transmit information such as packets, user data, control information, or any combination thereof associated with various information channels (e.g., control channels, data channels, information channels related to location-based service access for V2X systems). In some examples, the transmitter 715 may be co-located with a receiver 710 in a transceiver module. The transmitter 715 may utilize a single antenna or a set of multiple antennas.

The communications manager 720, the receiver 710, the transmitter 715, or various combinations thereof or various components thereof may be examples of means for performing various aspects of location-based service access for V2X systems as described herein. For example, the communications manager 720, the receiver 710, the transmitter 715, or various combinations or components thereof may support a method for performing one or more of the functions described herein.

In some examples, the communications manager 720, the receiver 710, the transmitter 715, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 720, the receiver 710, the transmitter 715, or various combinations or components thereof may be implemented in code (e.g., as communications management software or firmware) executed by a processor. If implemented in code executed by a processor, the functions of the communications manager 720, the receiver 710, the transmitter 715, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 720 may be configured to perform various operations (e.g., receiving, monitoring, transmitting) using or otherwise in cooperation with the receiver 710, the transmitter 715, or both. For example, the communications manager 720 may receive information from the receiver 710, send information to the transmitter 715, or be integrated in combination with the receiver 710, the transmitter 715, or both to receive information, transmit information, or perform various other operations as described herein.

The communications manager 720 may support wireless communication at a UE in accordance with examples as disclosed herein. For example, the communications manager 720 may be configured as or otherwise support a means for receiving, from an RSU, a sidelink message including an indication of a network address associated with a location-based service. The communications manager 720 may be configured as or otherwise support a means for accessing the location-based service over a connection with a network device, where the location-based service is accessed using the network address received from the RSU and based on a location of the UE. The communications manager 720 may be configured as or otherwise support a means for receiving location-based information from the location-based service over the connection with the network device.

By including or configuring the communications manager 720 in accordance with examples as described herein, the device 705 (e.g., a processor controlling or otherwise coupled to the receiver 710, the transmitter 715, the communications manager 720, or a combination thereof) may support techniques for reduced processing and more efficient utilization of storage at a UE by supporting location-based service access using network addresses provided by RSUs.

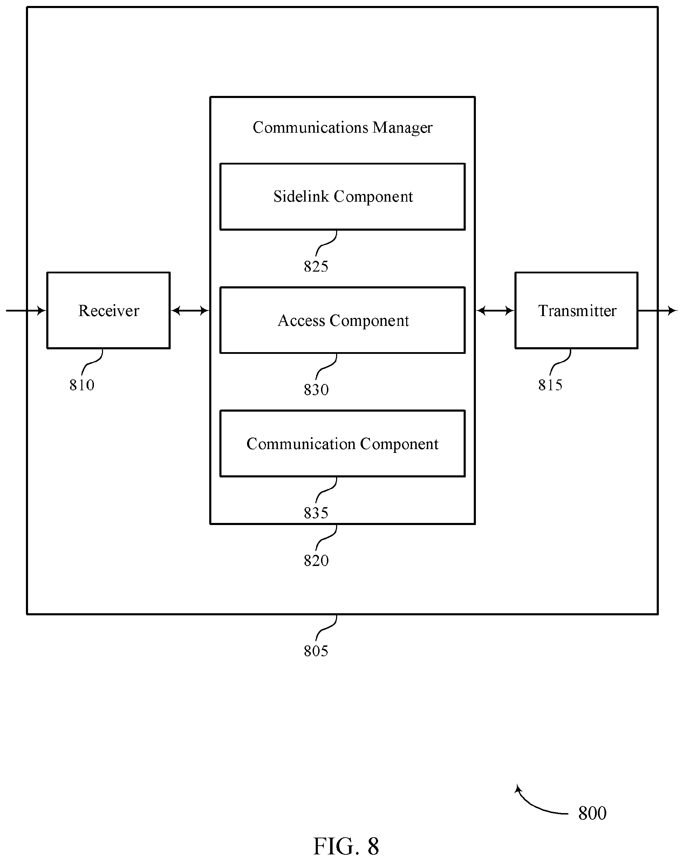

**FIG. 8** shows a block diagram 800 of a device 805 that supports location-based service access for V2X systems in accordance with aspects of the present disclosure. The device 805 may be an example of aspects of a device 705 or a UE 115 as described herein. The device 805 may include a receiver 810, a transmitter 815, and a communications manager 820. The device 805 may also include a processor. Each of these components may be in communication with one another (e.g., via one or more buses).

The receiver 810 may provide a means for receiving information such as packets, user data, control information, or any combination thereof associated with various information channels (e.g., control channels, data channels, information channels related to location-based service access for V2X systems). Information may be passed on to other components of the device 805. The receiver 810 may utilize a single antenna or a set of multiple antennas.

The transmitter 815 may provide a means for transmitting signals generated by other components of the device 805. For example, the transmitter 815 may transmit information such as packets, user data, control information, or any combination thereof associated with various information channels (e.g., control channels, data channels, information channels related to location-based service access for V2X systems). In some examples, the transmitter 815 may be co-located with a receiver 810 in a transceiver module. The transmitter 815 may utilize a single antenna or a set of multiple antennas.

The device 805, or various components thereof, may be an example of means for performing various aspects of location-based service access for V2X systems as described herein. For example, the communications manager 820 may include a sidelink component 825, an access component 830, a communication component 835, or any combination thereof. The communications manager 820 may be an example of aspects of a communications manager 720 as described herein. In some examples, the communications manager 820, or various components thereof, may be configured to perform various operations (e.g., receiving, monitoring, transmitting) using or otherwise in cooperation with the receiver 810, the transmitter 815, or both. For example, the communications manager 820 may receive information from the receiver 810, send information to the transmitter 815, or be integrated in combination with the receiver 810, the transmitter 815, or both to receive information, transmit information, or perform various other operations as described herein.

The communications manager 820 may support wireless communication at a UE in accordance with examples as disclosed herein. The sidelink component 825 may be configured as or otherwise support a means for receiving, from an RSU, a sidelink message including an indication of a network address associated with a location-based service. The access component 830 may be configured as or otherwise support a means for accessing the location-based service over a connection with a network device, where the location-based service is accessed using the network address received from the RSU and based on a location of the UE. The communication component 835 may be configured as or otherwise support a means for receiving location-based information from the location-based service over the connection with the network device.

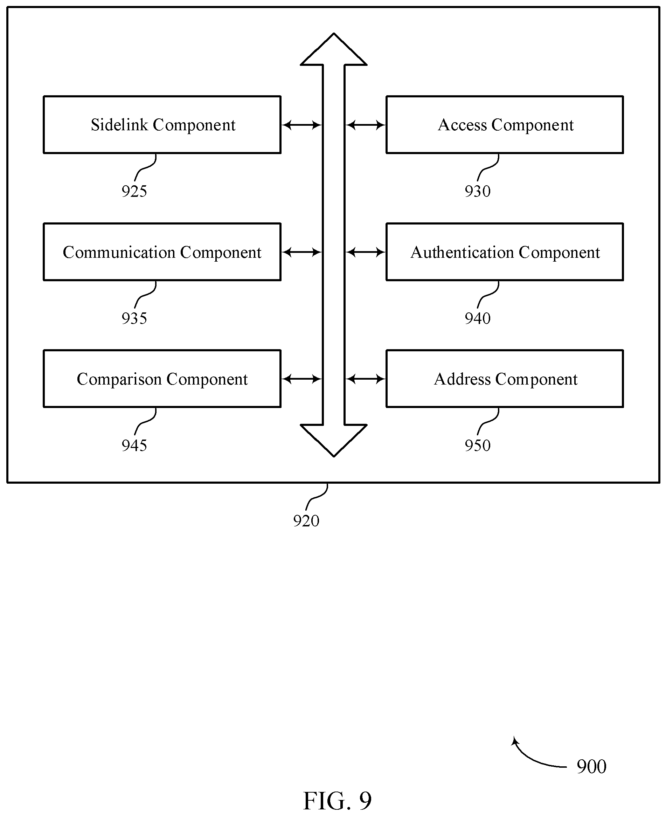

**FIG. 9** shows a block diagram 900 of a communications manager 920 that supports location-based service access for V2X systems in accordance with aspects of the present disclosure. The communications manager 920 may be an example of aspects of a communications manager 720, a communications manager 820, or both, as described herein. The communications manager 920, or various components thereof, may be an example of means for performing various aspects of location-based service access for V2X systems as described herein. For example, the communications manager 920 may include a sidelink component 925, an access component 930, a communication component 935, an authentication component 940, a comparison component 945, an address component 950, or any combination thereof. Each of these components may communicate, directly or indirectly, with one another (e.g., via one or more buses).

The communications manager 920 may support wireless communication at a UE in accordance with examples as disclosed herein. The sidelink component 925 may be configured as or otherwise support a means for receiving, from an RSU, a sidelink message including an indication of a network address associated with a location-based service. The access component 930 may be configured as or otherwise support a means for accessing the location-based service over a connection with a network device, where the location-based service is accessed using the network address received from the RSU and based on a location of the UE. The communication component 935 may be configured as or otherwise support a means for receiving location-based information from the location-based service over the connection with the network device.

In some examples, the sidelink message further indicates a set of one or more locations at which the UE accesses the location-based service to receive the location-based information, the location-based information including SPaT information for a respective location of the set of one or more locations.

In some examples, the comparison component 945 may be configured as or otherwise support a means for comparing the location of the UE to the set of one or more locations. In some examples, the comparison component 945 may be configured as or otherwise support a means for determining that the location of the UE matches a location of the set of one or more locations based on the comparison, where accessing the location-based service is based on the location of the UE matching the location of the set of one or more locations.

In some examples, the sidelink message further indicates a second set of one or more locations at which the UE receives the location-based information from one or more second RSUs without accessing the location-based service.

In some examples, the sidelink message further includes a first version number associated with map data for a region associated with the location of the UE. In some examples, the location-based information includes the map data corresponding to the first version number.

In some examples, the comparison component 945 may be configured as or otherwise support a means for comparing the first version number to a second version number associated with the map data stored at the UE. In some examples, the comparison component 945 may be configured as or otherwise support a means for determining that the first version number is different from the second version number based on the comparison, where accessing the location-based service is based on the first version number and the second version number being different.

In some examples, the sidelink message further indicates a region in which a network associated with the region provides geo-protected information. In some examples, the location-based information includes the geo-protected information.

In some examples, the comparison component 945 may be configured as or otherwise support a means for comparing the network address to a second network address associated with the location-based service stored at the UE, where accessing the location-based service is based on the comparison.

In some examples, the comparison component 945 may be configured as or otherwise support a means for determining that the network address is different from the second network address based on the comparison. In some examples, the address component 950 may be configured as or otherwise support a means for storing the network address at the UE based on the network address being different from the second network address.

In some examples, the sidelink message includes commercial information specific to the location of the UE. In some examples, accessing the location-based service is based on the commercial information.

In some examples, the sidelink message includes an indication of a service type associated with the location-based service and accessing the location-based service is based on the service type.

In some examples, the sidelink message includes an indication of an application description associated with the location-based service and accessing the location-based service is based on the application description.

In some examples, the sidelink component 925 may be configured as or otherwise support a means for receiving a second sidelink message indicating a first set of one or more locations at which the UE accesses the location-based service to receive the location-based information, a second set of one or more locations at which the UE receives the location-based information from one or more second RSUs without accessing the location-based service, a version number associated with the location-based information, a region in which a network associated with the region provides the location-based information, commercial information specific to the location of the UE, or a combination thereof, where accessing the location-based service is based on receiving the second sidelink message.

In some examples, the authentication component 940 may be configured as or otherwise support a means for receiving, from the RSU, a request for an authentication code associated with the UE. In some examples, the authentication component 940 may be configured as or otherwise support a means for transmitting, in response to receiving the request, the authentication code to the RSU, where receiving the sidelink message is based on transmitting the authentication code.

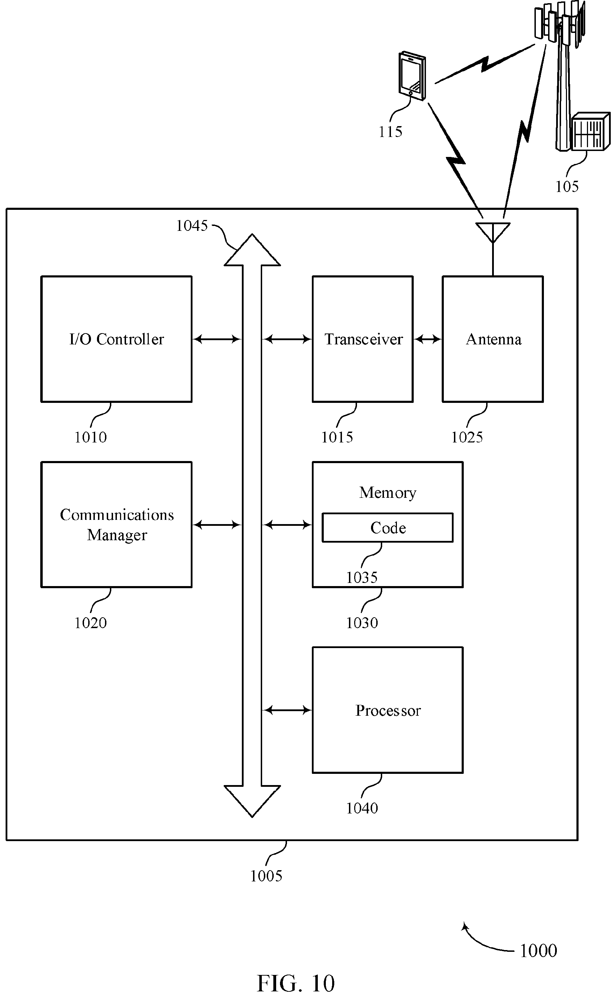

**FIG. 10** shows a diagram of a system 1000 including a device 1005 that supports location-based service access for V2X systems in accordance with aspects of the present disclosure. The device 1005 may be an example of or include the components of a device 705, a device 805, or a UE 115 as described herein. The device 1005 may communicate wirelessly with one or more base stations 105, UEs 115, or any combination thereof. The device 1005 may include components for bi-directional voice and data communications including components for transmitting and receiving communications, such as a communications manager 1020, an input/output (I/O) controller 1010, a transceiver 1015, an antenna 1025, a memory 1030, code 1035, and a processor 1040. These components may be in electronic communication or otherwise coupled (e.g., operatively, communicatively, functionally, electronically, electrically) via one or more buses (e.g., a bus 1045).

The I/O controller 1010 may manage input and output signals for the device 1005. The I/O controller 1010 may also manage peripherals not integrated into the device 1005. In some cases, the I/O controller 1010 may represent a physical connection or port to an external peripheral. In some cases, the I/O controller 1010 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 1010 may represent or interact with a modem, a keyboard, a mouse, a touchscreen, or a similar device. In some cases, the I/O controller 1010 may be implemented as part of a processor, such as the processor 1040. In some cases, a user may interact with the device 1005 via the I/O controller 1010 or via hardware components controlled by the I/O controller 1010.

In some cases, the device 1005 may include a single antenna 1025. However, in some other cases, the device 1005 may have more than one antenna 1025, which may be capable of concurrently transmitting or receiving multiple wireless transmissions. The transceiver 1015 may communicate bi-directionally, via the one or more antennas 1025, wired, or wireless links as described herein. For example, the transceiver 1015 may represent a wireless transceiver and may communicate bi-directionally with another wireless transceiver. The transceiver 1015 may also include a modem to modulate the packets, to provide the modulated packets to one or more antennas 1025 for transmission, and to demodulate packets received from the one or more antennas 1025. The transceiver 1015, or the transceiver 1015 and one or more antennas 1025, may be an example of a transmitter 715, a transmitter 815, a receiver 710, a receiver 810, or any combination thereof or component thereof, as described herein.

The memory 1030 may include random access memory (RAM) and read-only memory (ROM). The memory 1030 may store computer-readable, computer-executable code 1035 including instructions that, when executed by the processor 1040, cause the device 1005 to perform various functions described herein. The code 1035 may be stored in a non-transitory computer-readable medium such as system memory or another type of memory. In some cases, the code 1035 may not be directly executable by the processor 1040 but may cause a computer (e.g., when compiled and executed) to perform functions described herein. In some cases, the memory 1030 may contain, among other things, a basic I/O system (BIOS) which may control basic hardware or software operation such as the interaction with peripheral components or devices.

The processor 1040 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1040 may be configured to operate a memory array using a memory controller. In some other cases, a memory controller may be integrated into the processor 1040. The processor 1040 may be configured to execute computer-readable instructions stored in a memory (e.g., the memory 1030) to cause the device 1005 to perform various functions (e.g., functions or tasks supporting location-based service access for V2X systems). For example, the device 1005 or a component of the device 1005 may include a processor 1040 and memory 1030 coupled to the processor 1040, the processor 1040 and memory 1030 configured to perform various functions described herein.

The communications manager 1020 may support wireless communication at a UE in accordance with examples as disclosed herein. For example, the communications manager 1020 may be configured as or otherwise support a means for receiving, from an RSU, a sidelink message including an indication of a network address associated with a location-based service. The communications manager 1020 may be configured as or otherwise support a means for accessing the location-based service over a connection with a network device, where the location-based service is accessed using the network address received from the RSU and based on a location of the UE. The communications manager 1020 may be configured as or otherwise support a means for receiving location-based information from the location-based service over the connection with the network device.

By including or configuring the communications manager 1020 in accordance with examples as described herein, the device 1005 may support techniques for improved location-based services, location-based information delivery, network discovery and selection, traffic steering, connectivity, latency, spectral efficiency, coordination between devices, storage utilization, resource usage, and processing capability, among other benefits.

In some examples, the communications manager 1020 may be configured to perform various operations (e.g., receiving, monitoring, transmitting) using or otherwise in cooperation with the transceiver 1015, the one or more antennas 1025, or any combination thereof. Although the communications manager 1020 is illustrated as a separate component, in some examples, one or more functions described with reference to the communications manager 1020 may be supported by or performed by the processor 1040, the memory 1030, the code 1035, or any combination thereof. For example, the code 1035 may include instructions executable by the processor 1040 to cause the device 1005 to perform various aspects of location-based service access for V2X systems as described herein, or the processor 1040 and the memory 1030 may be otherwise configured to perform or support such operations.

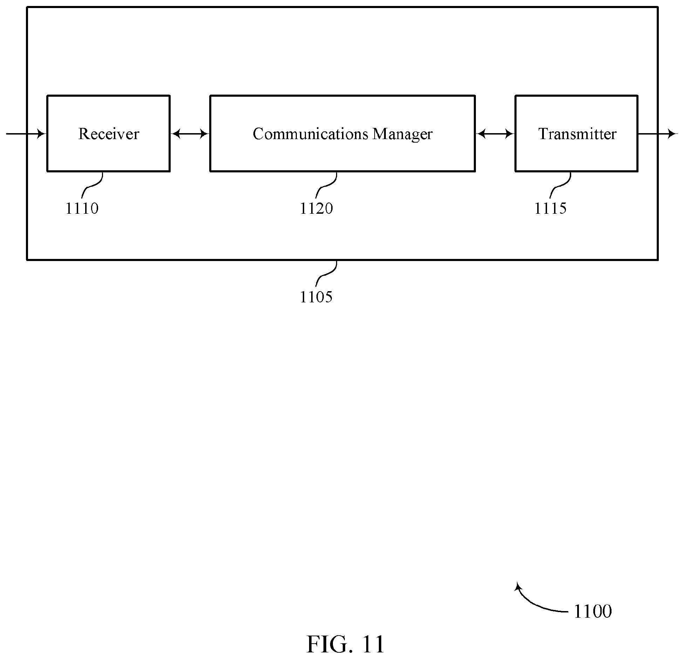

**FIG. 11** shows a block diagram 1100 of a device 1105 that supports location-based service access for V2X systems in accordance with aspects of the present disclosure. The device 1105 may be an example of aspects of an RSU as described herein. The device 1105 may include a receiver 1110, a transmitter 1115, and a communications manager 1120. The device 1105 may also include a processor. Each of these components may be in communication with one another (e.g., via one or more buses).

The receiver 1110 may provide a means for receiving information such as packets, user data, control information, or any combination thereof associated with various information channels (e.g., control channels, data channels, information channels related to location-based service access for V2X systems). Information may be passed on to other components of the device 1105. The receiver 1110 may utilize a single antenna or a set of multiple antennas.

The transmitter 1115 may provide a means for transmitting signals generated by other components of the device 1105. For example, the transmitter 1115 may transmit information such as packets, user data, control information, or any combination thereof associated with various information channels (e.g., control channels, data channels, information channels related to location-based service access for V2X systems). In some examples, the transmitter 1115 may be co-located with a receiver 1110 in a transceiver module. The transmitter 1115 may utilize a single antenna or a set of multiple antennas.

The communications manager 1120, the receiver 1110, the transmitter 1115, or various combinations thereof or various components thereof may be examples of means for performing various aspects of location-based service access for V2X systems as described herein. For example, the communications manager 1120, the receiver 1110, the transmitter 1115, or various combinations or components thereof may support a method for performing one or more of the functions described herein.

In some examples, the communications manager 1120, the receiver 1110, the transmitter 1115, or various combinations or components thereof may be implemented in hardware (e.g., in communications management circuitry). The hardware may include a processor, a DSP, an ASIC, an FPGA or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 1120, the receiver 1110, the transmitter 1115, or various combinations or components thereof may be implemented in code (e.g., as communications management software or firmware) executed by a processor. If implemented in code executed by a processor, the functions of the communications manager 1120, the receiver 1110, the transmitter 1115, or various combinations or components thereof may be performed by a general-purpose processor, a DSP, a CPU, an ASIC, an FPGA, or any combination of these or other programmable logic devices (e.g., configured as or otherwise supporting a means for performing the functions described in the present disclosure).

In some examples, the communications manager 1120 may be configured to perform various operations (e.g., receiving, monitoring, transmitting) using or otherwise in cooperation with the receiver 1110, the transmitter 1115, or both. For example, the communications manager 1120 may receive information from the receiver 1110, send information to the transmitter 1115, or be integrated in combination with the receiver 1110, the transmitter 1115, or both to receive information, transmit information, or perform various other operations as described herein.

The communications manager 1120 may support wireless communication in accordance with examples as disclosed herein. For example, the communications manager 1120 may be configured as or otherwise support a means for generating, by an RSU, an indication of a network address associated with a location-based service. The communications manager 1120 may be configured as or otherwise support a means for broadcasting, by the RSU and to one or more UEs, a sidelink message including the indication of the network address, the network address for accessing the location-based service over a connection with a network device based on a location of the one or more UEs.

By including or configuring the communications manager 1120 in accordance with examples as described herein, the device 1105 (e.g., a processor controlling or otherwise coupled to the receiver 1110, the transmitter 1115, the communications manager 1120, or a combination thereof) may support techniques for reduced processing and more efficient utilization of storage at a UE by supporting location-based service access using network addresses provided by an RSU.

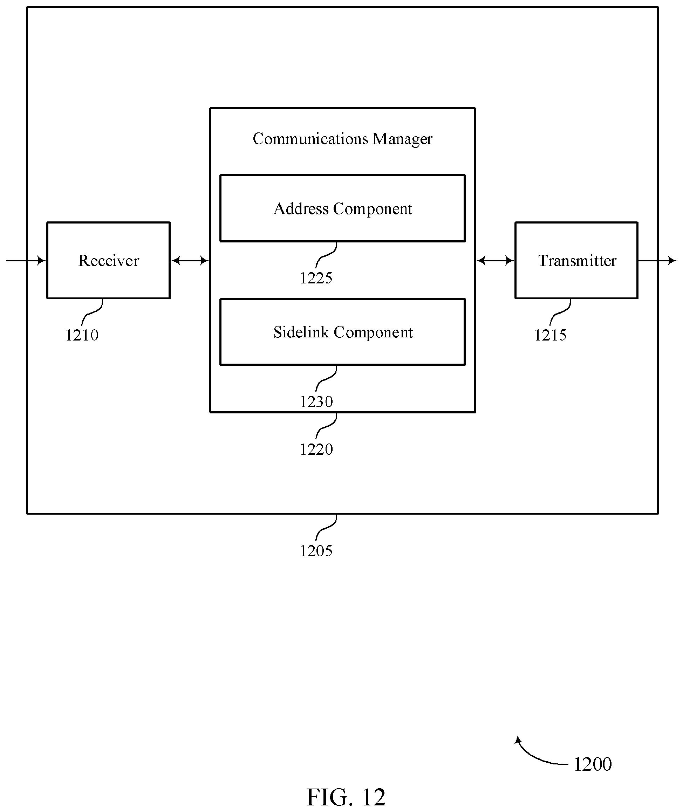

**FIG. 12** shows a block diagram 1200 of a device 1205 that supports location-based service access for V2X systems in accordance with aspects of the present disclosure. The device 1205 may be an example of aspects of a device 1105 or an RSU as described herein. The device 1205 may include a receiver 1210, a transmitter 1215, and a communications manager 1220. The device 1205 may also include a processor. Each of these components may be in communication with one another (e.g., via one or more buses).

The receiver 1210 may provide a means for receiving information such as packets, user data, control information, or any combination thereof associated with various information channels (e.g., control channels, data channels, information channels related to location-based service access for V2X systems). Information may be passed on to other components of the device 1205. The receiver 1210 may utilize a single antenna or a set of multiple antennas.

The transmitter 1215 may provide a means for transmitting signals generated by other components of the device 1205. For example, the transmitter 1215 may transmit information such as packets, user data, control information, or any combination thereof associated with various information channels (e.g., control channels, data channels, information channels related to location-based service access for V2X systems). In some examples, the transmitter 1215 may be co-located with a receiver 1210 in a transceiver module. The transmitter 1215 may utilize a single antenna or a set of multiple antennas.

The device 1205, or various components thereof, may be an example of means for performing various aspects of location-based service access for V2X systems as described herein. For example, the communications manager 1220 may include an address component 1225 a sidelink component 1230, or any combination thereof. The communications manager 1220 may be an example of aspects of a communications manager 1120 as described herein. In some examples, the communications manager 1220, or various components thereof, may be configured to perform various operations (e.g., receiving, monitoring, transmitting) using or otherwise in cooperation with the receiver 1210, the transmitter 1215, or both. For example, the communications manager 1220 may receive information from the receiver 1210, send information to the transmitter 1215, or be integrated in combination with the receiver 1210, the transmitter 1215, or both to receive information, transmit information, or perform various other operations as described herein.

The communications manager 1220 may support wireless communication in accordance with examples as disclosed herein. The address component 1225 may be configured as or otherwise support a means for generating, by an RSU, an indication of a network address associated with a location-based service. The sidelink component 1230 may be configured as or otherwise support a means for broadcasting, by the RSU and to one or more UEs, a sidelink message including the indication of the network address, the network address for accessing the location-based service over a connection with a network device based on a location of the one or more UEs.

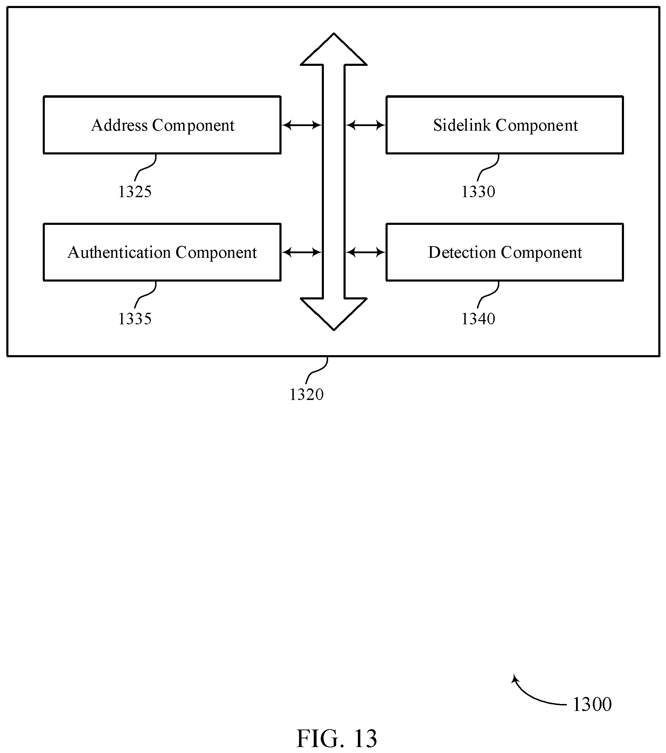

**FIG. 13** shows a block diagram 1300 of a communications manager 1320 that supports location-based service access for V2X systems in accordance with aspects of the present disclosure. The communications manager 1320 may be an example of aspects of a communications manager 1120, a communications manager 1220, or both, as described herein. The communications manager 1320, or various components thereof, may be an example of means for performing various aspects of location-based service access for V2X systems as described herein. For example, the communications manager 1320 may include an address component 1325, a sidelink component 1330, an authentication component 1335, a detection component 1340, or any combination thereof. Each of these components may communicate, directly or indirectly, with one another (e.g., via one or more buses).

The communications manager 1320 may support wireless communication in accordance with examples as disclosed herein. The address component 1325 may be configured as or otherwise support a means for generating, by an RSU, an indication of a network address associated with a location-based service. The sidelink component 1330 may be configured as or otherwise support a means for broadcasting, by the RSU and to one or more UEs, a sidelink message including the indication of the network address, the network address for accessing the location-based service over a connection with a network device based on a location of the one or more UEs.

In some examples, the sidelink message further indicates a set of one or more locations at which the UE accesses the location-based service.

In some examples, the sidelink message further indicates a second set of one or more locations at which one or more second RSUs transmit location-based information to the one or more UEs.

In some examples, the sidelink message further includes a version number associated with map data for a region.

In some examples, the sidelink message further indicates a region in which a network associated with the region provides geo-protected information.

In some examples, the sidelink message includes commercial information specific to a location of the one or more UEs.

In some examples, the sidelink message includes an indication of a service type associated with the location-based service.

In some examples, the sidelink message includes an indication of an application description associated with the location-based service.

In some examples, the sidelink component 1330 may be configured as or otherwise support a means for broadcasting, by the RSU and to the one or more UEs, a second sidelink message indicating a first set of one or more locations at which the one or more UEs access the location-based service, a second set of one or more locations at which the one or more UEs receive location-based information from one or more second RSUs without accessing the location-based service, a version number associated with the location-based information, a region in which a network associated with the region provides the location-based information, commercial information specific to a location of the one or more UEs, or a combination thereof.

In some examples, the authentication component 1335 may be configured as or otherwise support a means for determining, by the RSU, that the one or more UEs are authorized to receive the network address, where broadcasting the sidelink message is based on the determining.

In some examples, the authentication component 1335 may be configured as or otherwise support a means for transmitting, by the RSU to the one or more UEs, one or more requests for an authentication code associated with a respective UE of the one or more UEs. In some examples, the authentication component 1335 may be configured as or otherwise support a means for receiving, at the RSU from the one or more UEs, one or more authentication codes associated with the one or more UEs, where determining that the one or more UEs are authorized to receive the network address is based on the receiving the one or more authentication codes.

In some examples, the detection component 1340 may be configured as or otherwise support a means for detecting, by the RSU, that the one or more UEs enter a coverage area associated with sidelink communications at the RSU, where broadcasting the sidelink message is based on the detecting.

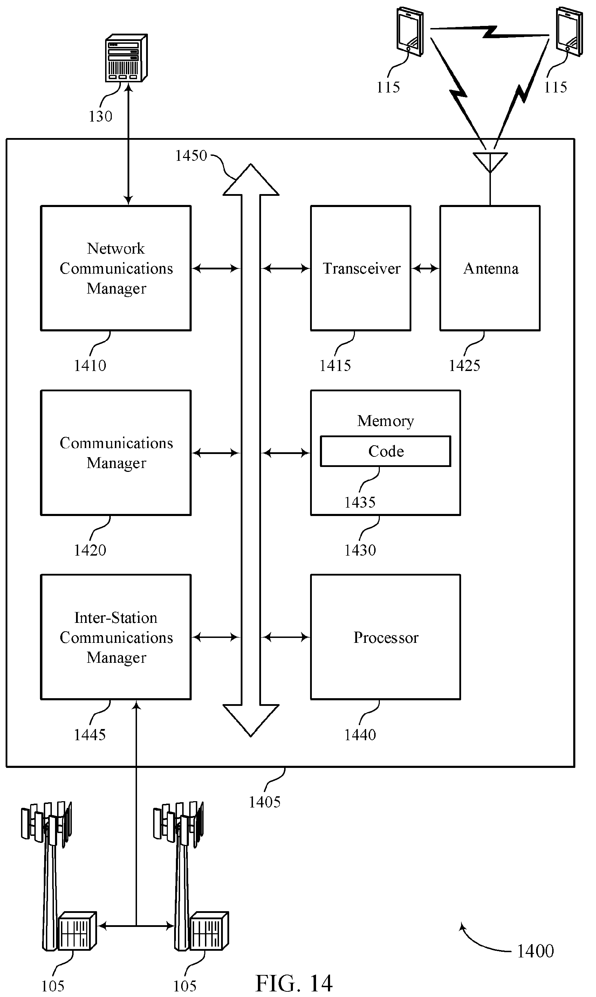

**FIG. 14** shows a diagram of a system 1400 including a device 1405 that supports location-based service access for V2X systems in accordance with aspects of the present disclosure. The device 1405 may be an example of or include the components of a device 1105, a device 1205, or an RSU as described herein. The device 1405 may communicate wirelessly with one or more base stations 105, UEs 115, or any combination thereof. The device 1405 may include components for bi-directional voice and data communications including components for transmitting and receiving communications, such as a communications manager 1420, a network communications manager 1410, a transceiver 1415, an antenna 1425, a memory 1430, code 1435, a processor 1440, and an inter-station communications manager 1445. These components may be in electronic communication or otherwise coupled (e.g., operatively, communicatively, functionally, electronically, electrically) via one or more buses (e.g., a bus 1450).

The network communications manager 1410 may manage communications with a core network 130 (e.g., via one or more wired backhaul links). For example, the network communications manager 1410 may manage the transfer of data communications for client devices, such as one or more UEs 115.

In some cases, the device 1405 may include a single antenna 1425. However, in some other cases the device 1405 may have more than one antenna 1425, which may be capable of concurrently transmitting or receiving multiple wireless transmissions. The transceiver 1415 may communicate bi-directionally, via the one or more antennas 1425, wired, or wireless links as described herein. For example, the transceiver 1415 may represent a wireless transceiver and may communicate bi-directionally with another wireless transceiver. The transceiver 1415 may also include a modem to modulate the packets, to provide the modulated packets to one or more antennas 1425 for transmission, and to demodulate packets received from the one or more antennas 1425. The transceiver 1415, or the transceiver 1415 and one or more antennas 1425, may be an example of a transmitter 1115, a transmitter 1215, a receiver 1110, a receiver 1210, or any combination thereof or component thereof, as described herein.

The memory 1430 may include RAM and ROM. The memory 1430 may store computer-readable, computer-executable code 1435 including instructions that, when executed by the processor 1440, cause the device 1405 to perform various functions described herein. The code 1435 may be stored in a non-transitory computer-readable medium such as system memory or another type of memory. In some cases, the code 1435 may not be directly executable by the processor 1440 but may cause a computer (e.g., when compiled and executed) to perform functions described herein. In some cases, the memory 1430 may contain, among other things, a BIOS which may control basic hardware or software operation such as the interaction with peripheral components or devices.

The processor 1440 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1440 may be configured to operate a memory array using a memory controller. In some other cases, a memory controller may be integrated into the processor 1440. The processor 1440 may be configured to execute computer-readable instructions stored in a memory (e.g., the memory 1430) to cause the device 1405 to perform various functions (e.g., functions or tasks supporting location-based service access for V2X systems). For example, the device 1405 or a component of the device 1405 may include a processor 1440 and memory 1430 coupled to the processor 1440, the processor 1440 and memory 1430 configured to perform various functions described herein.

The inter-station communications manager 1445 may manage communications with base stations 105, and may include a controller or scheduler for controlling communications with UEs 115 in cooperation with base stations 105. For example, the inter-station communications manager 1445 may coordinate scheduling for transmissions to UEs 115 for various interference mitigation techniques such as beamforming or joint transmission. In some examples, the inter-station communications manager 1445 may provide an X2 interface within an LTE/LTE-A wireless communications network technology to provide communication between base stations 105.

The communications manager 1420 may support wireless communication in accordance with examples as disclosed herein. For example, the communications manager 1420 may be configured as or otherwise support a means for generating, by an RSU, an indication of a network address associated with a location-based service. The communications manager 1420 may be configured as or otherwise support a means for broadcasting, by the RSU and to one or more UEs, a sidelink message including the indication of the network address, the network address for accessing the location-based service over a connection with a network device based on a location of the one or more UEs.

By including or configuring the communications manager 1420 in accordance with examples as described herein, the device 1405 may support techniques for improved location-based services, location-based information delivery, network discovery and selection, traffic steering, connectivity, latency, spectral efficiency, coordination between devices, storage utilization, resource usage, and processing capability, among other benefits.

In some examples, the communications manager 1420 may be configured to perform various operations (e.g., receiving, monitoring, transmitting) using or otherwise in cooperation with the transceiver 1415, the one or more antennas 1425, or any combination thereof. Although the communications manager 1420 is illustrated as a separate component, in some examples, one or more functions described with reference to the communications manager 1420 may be supported by or performed by the processor 1440, the memory 1430, the code 1435, or any combination thereof. For example, the code 1435 may include instructions executable by the processor 1440 to cause the device 1405 to perform various aspects of location-based service access for V2X systems as described herein, or the processor 1440 and the memory 1430 may be otherwise configured to perform or support such operations.

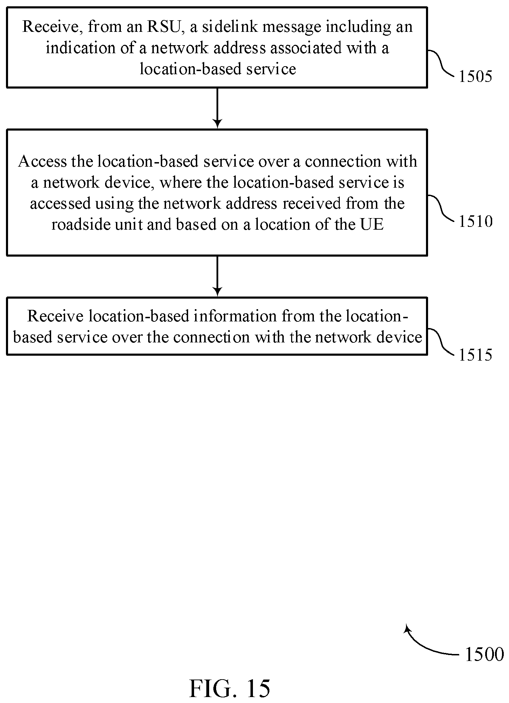

**FIG. 15** shows a flowchart illustrating a method 1500 that supports location-based service access for V2X systems in accordance with aspects of the present disclosure. The operations of the method 1500 may be implemented by a UE or its components as described herein. For example, the operations of the method 1500 may be performed by a UE 115 as described with reference to FIGs. 1 through 10. In some examples, a UE may execute a set of instructions to control the functional elements of the UE to perform the described functions. Additionally or alternatively, the UE may perform aspects of the described functions using special-purpose hardware.

At 1505, the method may include receiving, from an RSU, a sidelink message including an indication of a network address associated with a location-based service. The operations of 1505 may be performed in accordance with examples as disclosed herein. In some examples, aspects of the operations of 1505 may be performed by a sidelink component 925 as described with reference to FIG. 9.

At 1510, the method may include accessing the location-based service over a connection with a network device, where the location-based service is accessed using the network address received from the RSU and based on a location of the UE. The operations of 1510 may be performed in accordance with examples as disclosed herein. In some examples, aspects of the operations of 1510 may be performed by an access component 930 as described with reference to FIG. 9.

At 1515, the method may include receiving location-based information from the location-based service over the connection with the network device. The operations of 1515 may be performed in accordance with examples as disclosed herein. In some examples, aspects of the operations of 1515 may be performed by a communication component 935 as described with reference to FIG. 9.

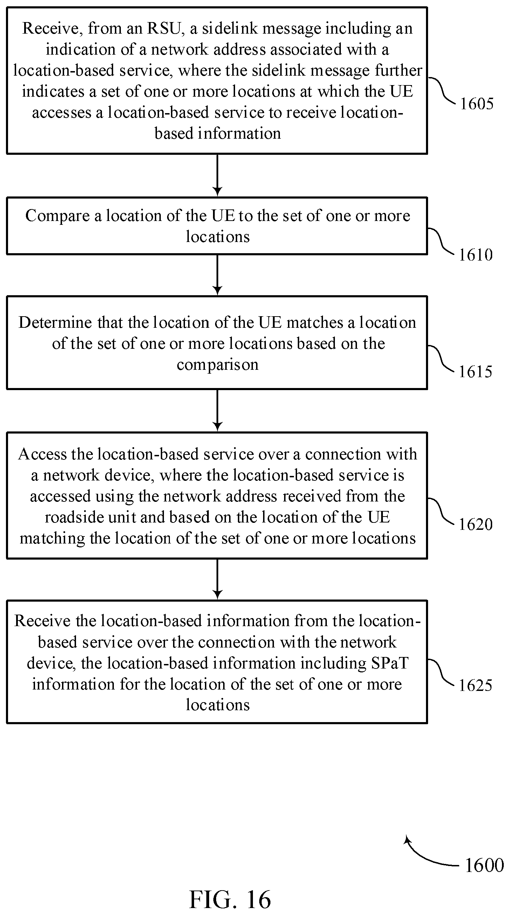

**FIG. 16** shows a flowchart illustrating a method 1600 that supports location-based service access for V2X systems in accordance with aspects of the present disclosure. The operations of the method 1600 may be implemented by a UE or its components as described herein. For example, the operations of the method 1600 may be performed by a UE 115 as described with reference to FIGs. 1 through 10. In some examples, a UE may execute a set of instructions to control the functional elements of the UE to perform the described functions. Additionally or alternatively, the UE may perform aspects of the described functions using special-purpose hardware.

At 1605, the method may include receiving, from an RSU, a sidelink message including an indication of a network address associated with a location-based service, where the sidelink message further indicates a set of one or more locations at which the UE accesses a location-based service to receive location-based information. The operations of 1605 may be performed in accordance with examples as disclosed herein. In some examples, aspects of the operations of 1605 may be performed by a sidelink component 925 as described with reference to FIG. 9.

At 1610, the method may include comparing a location of the UE to the set of one or more locations. The operations of 1610 may be performed in accordance with examples as disclosed herein. In some examples, aspects of the operations of 1610 may be performed by a comparison component 945 as described with reference to FIG. 9.

At 1615, the method may include determining that the location of the UE matches a location of the set of one or more locations based on the comparison. The operations of 1615 may be performed in accordance with examples as disclosed herein. In some examples, aspects of the operations of 1615 may be performed by a comparison component 945 as described with reference to FIG. 9.

At 1620, the method may include accessing the location-based service over a connection with a network device, where the location-based service is accessed using the network address received from the RSU and based on the location of the UE matching the location of the set of one or more locations. The operations of 1620 may be performed in accordance with examples as disclosed herein. In some examples, aspects of the operations of 1620 may be performed by an access component 930 as described with reference to FIG. 9.

At 1625, the method may include receiving location-based information from the location-based service over the connection with the network device, the location-based information including SPaT information for the location of the set of one or more locations. The operations of 1625 may be performed in accordance with examples as disclosed herein. In some examples, aspects of the operations of 1625 may be performed by a communication component 935 as described with reference to FIG. 9.

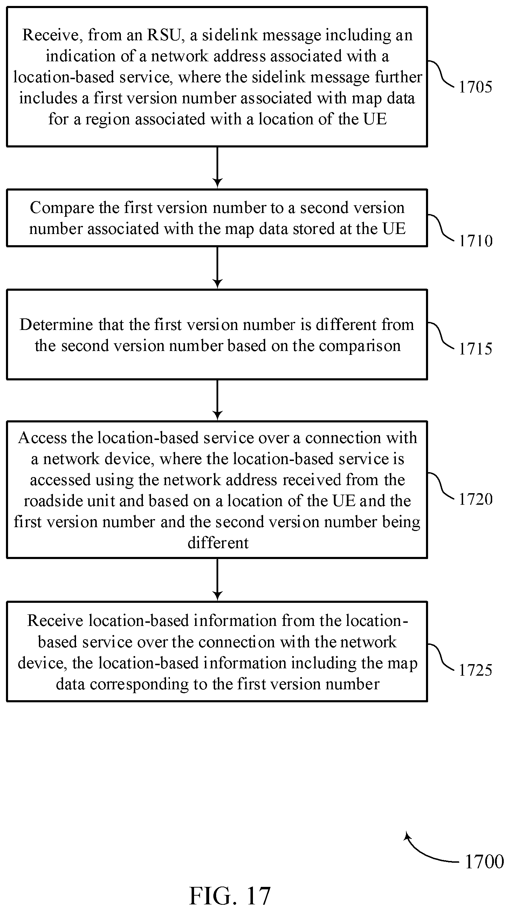

**FIG. 17** shows a flowchart illustrating a method 1700 that supports location-based service access for V2X systems in accordance with aspects of the present disclosure. The operations of the method 1700 may be implemented by a UE or its components as described herein. For example, the operations of the method 1700 may be performed by a UE 115 as described with reference to FIGs. 1 through 10. In some examples, a UE may execute a set of instructions to control the functional elements of the UE to perform the described functions. Additionally or alternatively, the UE may perform aspects of the described functions using special-purpose hardware.

At 1705, the method may include receiving, from an RSU, a sidelink message including an indication of a network address associated with a location-based service, where the sidelink message further includes a first version number associated with map data for a region associated with a location of the UE. The operations of 1705 may be performed in accordance with examples as disclosed herein. In some examples, aspects of the operations of 1705 may be performed by a sidelink component 925 as described with reference to FIG. 9.

At 1710, the method may include comparing the first version number to a second version number associated with the map data stored at the UE. The operations of 1710 may be performed in accordance with examples as disclosed herein. In some examples, aspects of the operations of 1710 may be performed by a comparison component 945 as described with reference to FIG. 9.

At 1715, the method may include determining that the first version number is different from the second version number based on the comparison. The operations of 1715 may be performed in accordance with examples as disclosed herein. In some examples, aspects of the operations of 1715 may be performed by a comparison component 945 as described with reference to FIG. 9.

At 1720, the method may include accessing the location-based service over a connection with a network device, where the location-based service is accessed using the network address received from the RSU and based on a location of the UE and the first version number and the second version number being different. The operations of 1720 may be performed in accordance with examples as disclosed herein. In some examples, aspects of the operations of 1720 may be performed by an access component 930 as described with reference to FIG. 9.

At 1725, the method may include receiving location-based information from the location-based service over the connection with the network device, the location-based information including the map data corresponding to the first version number. The operations of 1725 may be performed in accordance with examples as disclosed herein. In some examples, aspects of the operations of 1725 may be performed by a communication component 935 as described with reference to FIG. 9.

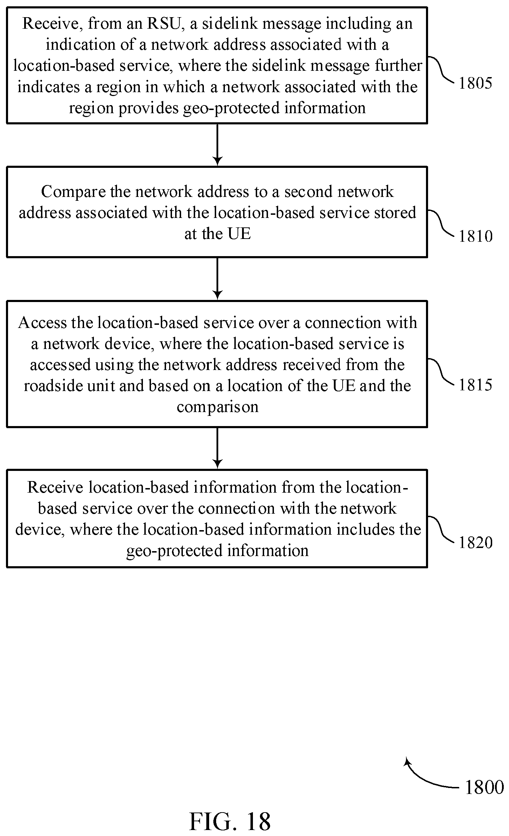

**FIG. 18** shows a flowchart illustrating a method 1800 that supports location-based service access for V2X systems in accordance with aspects of the present disclosure. The operations of the method 1800 may be implemented by a UE or its components as described herein. For example, the operations of the method 1800 may be performed by a UE 115 as described with reference to FIGs. 1 through 10. In some examples, a UE may execute a set of instructions to control the functional elements of the UE to perform the described functions. Additionally or alternatively, the UE may perform aspects of the described functions using special-purpose hardware.

At 1805, the method may include receiving, from an RSU, a sidelink message including an indication of a network address associated with a location-based service, where the sidelink message further indicates a region in which a network associated with the region provides geo-protected information. The operations of 1805 may be performed in accordance with examples as disclosed herein. In some examples, aspects of the operations of 1805 may be performed by a sidelink component 925 as described with reference to FIG. 9.

At 1810, the method may include comparing the network address to a second network address associated with the location-based service stored at the UE. The operations of 1810 may be performed in accordance with examples as disclosed herein. In some examples, aspects of the operations of 1810 may be performed by a comparison component 945 as described with reference to FIG. 9.

At 1815, the method may include accessing the location-based service over a connection with a network device, where the location-based service is accessed using the network address received from the RSU and based on a location of the UE and the comparison. The operations of 1815 may be performed in accordance with examples as disclosed herein. In some examples, aspects of the operations of 1815 may be performed by an access component 930 as described with reference to FIG. 9.

At 1820, the method may include receiving location-based information from the location-based service over the connection with the network device, where the location-based information includes the geo-protected information. The operations of 1820 may be performed in accordance with examples as disclosed herein. In some examples, aspects of the operations of 1820 may be performed by a communication component 935 as described with reference to FIG. 9.

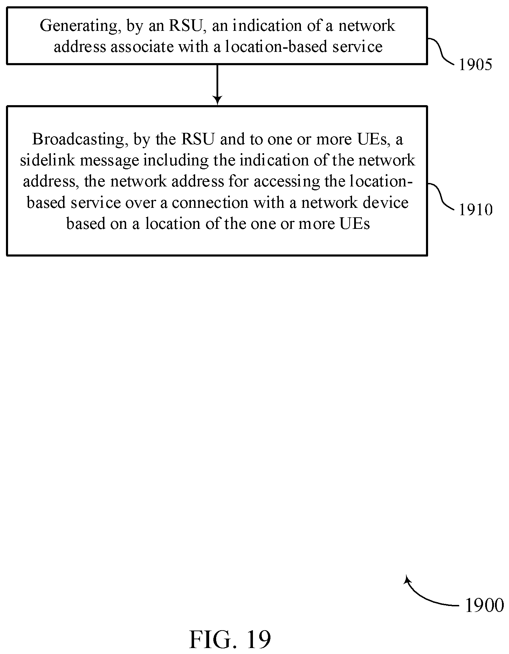

FIG. 19 shows a flowchart illustrating a method 1900 that supports location-based service access for V2X systems in accordance with aspects of the present disclosure. The operations of the method 1900 may be implemented by an RSU or its components as described herein. For example, the operations of the method 1900 may be performed by an RSU as described with reference to FIGs. 1 through 6 and 11 through 14. In some examples, an RSU may execute a set of instructions to control the functional elements of the RSU to perform the described functions. Additionally or alternatively, the RSU may perform aspects of the described functions using special-purpose hardware.

At 1905, the method may include generating, by an RSU, an indication of a network address associated with a location-based service. The operations of 1905 may be performed in accordance with examples as disclosed herein. In some examples, aspects of the operations of 1905 may be performed by an address component 1325 as described with reference to FIG. 13.

At 1910, the method may include broadcasting, by the RSU and to one or more UEs, a sidelink message including the indication of the network address, the network address for accessing the location-based service over a connection with a network device based on a location of the one or more UEs. The operations of 1910 may be performed in accordance with examples as disclosed herein. In some examples, aspects of the operations of 1910 may be performed by a sidelink component 1330 as described with reference to FIG. 13.

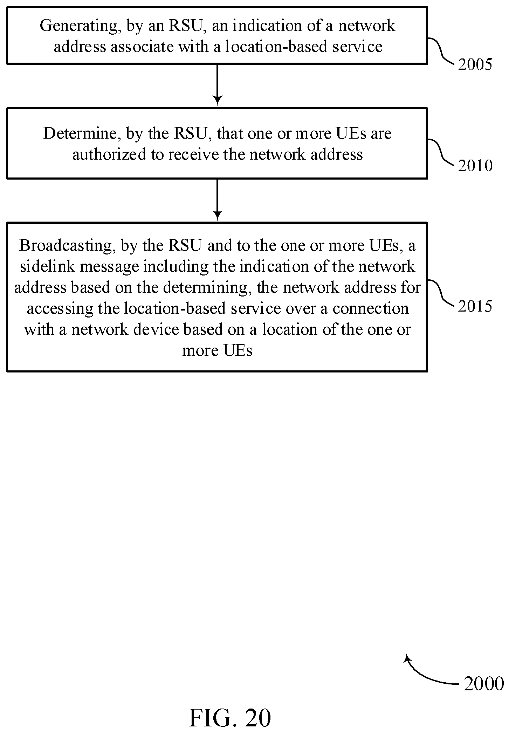

**FIG. 20** shows a flowchart illustrating a method 2000 that supports location-based service access for V2X systems in accordance with aspects of the present disclosure. The operations of the method 2000 may be implemented by an RSU or its components as described herein. For example, the operations of the method 2000 may be performed by a an RSU as described with reference to FIGs. 1 through 6 and 11 through 14. In some examples, an RSU may execute a set of instructions to control the functional elements of the RSU to perform the described functions. Additionally or alternatively, the RSU may perform aspects of the described functions using special-purpose hardware.

At 2005, the method may include generating, by an RSU, an indication of a network address associated with a location-based service. The operations of 2005 may be performed in accordance with examples as disclosed herein. In some examples, aspects of the operations of 2005 may be performed by an address component 1325 as described with reference to FIG. 13.

At 2010, the method may include determining, by the RSU, that one or more UEs are authorized to receive the network address. The operations of 2010 may be performed in accordance with examples as disclosed herein. In some examples, aspects of the operations of 2010 may be performed by an authentication component 1335 as described with reference to FIG. 13.

At 2015, the method may include broadcasting, by the RSU and to the one or more UEs, a sidelink message including the indication of the network address based on the determining, the network address for accessing the location-based service over a connection with a network device based on a location of the one or more UEs. The operations of 2015 may be performed in accordance with examples as disclosed herein. In some examples, aspects of the operations of 2015 may be performed by a sidelink component 1330 as described with reference to FIG. 13.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the scope of protection as defined by the appended claims.

## Claims

1. An apparatus for wireless communication at a user equipment, UE, the apparatus comprising:
a processor;
memory coupled with the processor; and
instructions stored in the memory and executable by the processor to cause the apparatus to:
receive (1505), from a roadside unit, a sidelink message comprising an indication of a network address associated with a location-based service and further comprising a first version number associated with map data for a region associated with a location of the UE;
access (1510) the location-based service over a connection with a network device, wherein the location-based service is accessed using the network address received from the roadside unit and based at least in part on the location of the UE;
receive (1515) location-based information from the location-based service over the connection with the network device, wherein the location-based information comprises the map data corresponding to the first version number;
compare the first version number to a second version number associated with map data stored at the UE; and
determine that the first version number is different from the second version number based at least in part on the comparison, wherein accessing the location-based service is based at least in part on the first version number and the second version number being different.

2. The apparatus of claim 1, wherein the sidelink message further indicates a set of one or more locations at which the UE accesses the location-based service to receive the location-based information, the location-based information comprising signal phase and timing information for a respective location of the set of one or more locations.

3. The apparatus of claim 2, wherein the instructions are further executable by the processor to cause the apparatus to:
compare the location of the UE to the set of one or more locations; and
determine that the location of the UE matches a location of the set of one or more locations based at least in part on the comparison, wherein accessing the location-based service is based at least in part on the location of the UE matching the location of the set of one or more locations.

4. The apparatus of claim 1, wherein:
the sidelink message further indicates a region in which a network associated with the region provides geo-protected information; and
the location-based information comprises the geo-protected information.

5. The apparatus of claim 4, wherein the instructions are further executable by the processor to cause the apparatus to:
compare the network address to a second network address associated with the location-based service stored at the UE, wherein accessing the location-based service is based at least in part on the comparison.

6. The apparatus of claim 5, wherein the instructions are further executable by the processor to cause the apparatus to:
determine that the network address is different from the second network address based at least in part on the comparison; and
store the network address at the UE based at least in part on the network address being different from the second network address.

7. The apparatus of claim 1, wherein:
the sidelink message comprises commercial information specific to the location of the UE; and accessing the location-based service is based at least in part on the commercial information; or
the sidelink message comprises an indication of a service type associated with the location-based service; and accessing the location-based service is based at least in part on the service type; or
the sidelink message comprises an indication of an application description associated with the location-based service; and accessing the location-based service is based at least in part on the application description.

8. The apparatus of claim 1, wherein the instructions are further executable by the processor to cause the apparatus to:
receive a second sidelink message indicating a first set of one or more locations at which the UE accesses the location-based service to receive the location-based information, a second set of one or more locations at which the UE receives the location-based information from one or more second roadside units without accessing the location-based service, a version number associated with the location-based information, a region in which a network associated with the region provides the location-based information, commercial information specific to the location of the UE, or a combination thereof, wherein accessing the location-based service is based at least in part on receiving the second sidelink message.

9. The apparatus of claim 1, wherein the instructions are further executable by the processor to cause the apparatus to:
receive, from the roadside unit, a request for an authentication code associated with the UE; and
transmit, in response to receiving the request, the authentication code to the roadside unit, wherein receiving the sidelink message is based at least in part on transmitting the authentication code.

10. A method for wireless communication at a user equipment, UE, the method comprising:
receiving (1505), from a roadside unit, a sidelink message comprising an indication of a network address associated with a location-based service and further comprising a first version number associated with map data for a region associated with a location of the UE;
accessing (1510) the location-based service over a connection with a network device, wherein the location-based service is accessed using the network address received from the roadside unit and based at least in part on the location of the UE;
receiving (1515) location-based information from the location-based service over the connection with the network device, wherein the location-based information comprises the map data corresponding to the first version number;
comparing the first version number to a second version number associated with map data stored at the UE; and
determining that the first version number is different from the second version number based at least in part on the comparison, wherein accessing the location-based service is based at least in part on the first version number and the second version number being different.

## Patentansprüche

1. Eine Vorrichtung für eine drahtlose Kommunikation an einem Benutzergerät (User Equipment bzw. UE), wobei die Vorrichtung aufweist:
einen Prozessor,
einen Speicher, der mit dem Prozessor gekoppelt ist, und
Befehle, die in dem Speicher gespeichert sind und durch den Prozessor ausgeführt werden können, um die Vorrichtung zu veranlassen zum:
Empfangen (1505), von einer straßenseitigen Einheit, einer Sidelink-Nachricht, die eine Angabe einer Netzadresse, die mit einem standortbasierten Dienst assoziiert ist, aufweist und weiterhin eine erste Versionsnummer, die mit Kartendaten für einen mit einem Standort des UE assoziierten Bereich assoziiert ist, aufweist,
Zugreifen (1510) auf den standortbasierten Dienst über eine Verbindung mit einem Netzgerät, wobei auf den standortbasierten Dienst unter Verwendung der von der straßenseitigen Einheit empfangenen Netzadresse und basierend wenigstens teilweise auf dem Standort des UE zugegriffen wird,
Empfangen (1515) von standortbasierten Informationen von dem standortbasierten Dienst über die Verbindung mit dem Netzgerät, wobei die standortbasierten Informationen die Kartendaten in Entsprechung zu der ersten Versionsnummer aufweisen,
Vergleichen der ersten Versionsnummer mit einer zweiten Versionsnummer, die mit an dem UE gespeicherten Kartendaten assoziiert ist, und
Bestimmen, dass die erste Versionsnummer von der zweiten Versionsnummer verschieden ist, basierend wenigstens teilweise auf dem Vergleich, wobei das Zugreifen auf den standortbasierten Dienst wenigstens teilweise darauf, dass die erste Versionsnummer und die zweite Versionsnummer verschieden sind, basiert.

2. Vorrichtung nach Anspruch 1, wobei die Sidelink-Nachricht weiterhin einen Satz eines oder mehrerer Standorte, an denen das UE auf den standortbasierten Dienst zugreift, um die standortbasierten Informationen zu empfangen, angibt, wobei die standortbasierten Informationen Signalphasen-und Timinginformationen für einen entsprechenden Standort aus dem Satz eines oder mehrerer Standorte aufweisen.

3. Vorrichtung nach Anspruch 2, wobei die Befehle weiterhin durch den Prozessor ausgeführt werden können, um die Vorrichtung zu veranlassen zum:
Vergleichen des Standorts des UE mit dem Satz eines oder mehrerer Standorte, und
Bestimmen, dass der Standort des UE einem Standort aus dem Satz eines oder mehrerer Standorte entspricht, basierend wenigstens teilweise auf dem Vergleich, wobei das Zugreifen auf den standortbasierten Dienst wenigstens teilweise darauf basiert, dass der Standort des UE dem Standort aus dem Satz eines oder mehrerer Standorte entspricht.

4. Vorrichtung nach Anspruch 1, wobei:
die Sidelink-Nachricht weiterhin einen Bereich angibt, in dem ein mit dem Bereich assoziiertes Netz geogeschützte Informationen vorsieht, und
die standortbasierten Informationen die geogeschützten Informationen aufweisen.

5. Vorrichtung nach Anspruch 4, wobei die Befehle weiterhin durch den Prozessor ausgeführt werden können, um die Vorrichtung zu veranlassen zum:
Vergleichen der Netzadresse mit einer zweiten Netzadresse, die mit dem an dem UE gespeicherten standortbasierten Dienst assoziiert ist, wobei das Zugreifen auf den standortbasierten Dienst wenigstens teilweise auf dem Vergleich basiert.

6. Vorrichtung nach Anspruch 5, wobei die Befehle weiterhin durch den Prozessor ausgeführt werden können, um die Vorrichtung zu veranlassen zum:
Bestimmen, dass die Netzadresse von der zweiten Netzadresse verschieden ist, basierend wenigstens teilweise auf dem Vergleich, und
Speichern der Netzadresse an dem UE basierend wenigstens teilweise darauf, dass die Netzadresse von der zweiten Netzadresse verschieden ist.

7. Vorrichtung nach Anspruch 1, wobei:
die Sidelink-Nachricht kommerzielle Informationen aufweist, die spezifisch für den Standort des UE sind, und das Zugreifen auf den standortbasierten Dienst wenigstens teilweise auf den kommerziellen Informationen basiert, oder
die Sidelink-Nachricht eine Angabe eines mit dem standortbasierten Dienst assoziierten Diensttyps aufweist, und das Zugreifen auf den standortbasierten Dienst wenigstens teilweise auf dem Diensttyp basiert, oder
die Sidelink-Nachricht eine Angabe einer mit dem standortbasierten Dienst assoziierten Anwendungsbeschreibung aufweist, und das Zugreifen auf den standortbasierten Dienst basierend wenigstens teilweise auf der Anwendungsbeschreibung basiert.

8. Vorrichtung nach Anspruch 1, wobei die Befehle weiterhin durch den Prozessor ausgeführt werden können, um die Vorrichtung zu veranlassen zum:
Empfangen einer zweiten Sidelink-Nachricht, die einen ersten Satz eines oder mehrerer Standorte, an denen das UE auf den standortbasierten Dienst zugreift, um die standortbasierten Informationen zu empfangen, einen zweiten Satz eines oder mehrerer Standorte, an denen das UE die standortbasierten Informationen von einer oder mehreren straßenseitigen Einheiten empfängt, ohne auf den standortbasierten Dienst zuzugreifen, eine mit den standortbasierten Informationen assoziierte Versionsnummer, einen Bereich, in dem ein mit dem Bereich assoziiertes Netz die standortbasierten Informationen vorsieht, kommerzielle Informationen, die für den Standort des UE spezifisch sind, oder eine Kombination aus diesen angibt, wobei das Zugreifen auf den standortbasierten Dienst wenigstens teilweise auf dem Empfangen der zweiten Sidelink-Nachricht basiert.

9. Vorrichtung nach Anspruch 1, wobei die Befehle weiterhin durch den Prozessor ausgeführt werden können, um die Vorrichtung zu veranlassen zum:
Empfangen, von der straßenseitigen Einheit, einer Anfrage für einen mit dem UE assoziierten Authentifizierungscode, und
Senden, in Antwort auf das Empfangen der Anfrage, des Authentifizierungscodes an die straßenseitige Einheit, wobei das Empfangen der Sidelink-Nachricht wenigstens teilweise auf dem Senden des Authentifizierungscodes basiert.

10. Ein Verfahren für eine drahtlose Kommunikation an einem Benutzergerät (User Equipment bzw. UE), wobei das Verfahren aufweist:
Empfangen (1505), von einer straßenseitigen Einheit, einer Sidelink-Nachricht, die eine Angabe einer Netzadresse, die mit einem standortbasierten Dienst assoziiert ist, aufweist und weiterhin eine erste Versionsnummer, die mit Kartendaten für einen mit einem Standort des UE assoziierten Bereich assoziiert ist, aufweist,
Zugreifen (1510) auf den standortbasierten Dienst über eine Verbindung mit einem Netzgerät, wobei auf den standortbasierten Dienst unter Verwendung der von der straßenseitigen Einheit empfangenen Netzadresse und basierend wenigstens teilweise auf dem Standort des UE zugegriffen wird,
Empfangen (1515) von standortbasierten Informationen von dem standortbasierten Dienst über die Verbindung mit dem Netzgerät, wobei die standortbasierten Informationen die Kartendaten in Entsprechung zu der ersten Versionsnummer aufweisen,
Vergleichen der ersten Versionsnummer mit einer zweiten Versionsnummer, die mit an dem UE gespeicherten Kartendaten assoziiert ist, und
Bestimmen, dass die erste Versionsnummer von der zweiten Versionsnummer verschieden ist, basierend wenigstens teilweise auf dem Vergleich, wobei das Zugreifen auf den standortbasierten Dienst wenigstens teilweise darauf, dass die erste Versionsnummer und die zweite Versionsnummer verschieden sind, basiert.

## Revendications

1. Un appareil pour la communication sans fil au niveau d'un équipement utilisateur, UE, l'appareil comprenant :
un processeur ;
une mémoire couplée au processeur ; et
des instructions stockées dans la mémoire et exécutables par le processeur pour amener l'appareil à :
recevoir (1505), depuis une unité en bord de route, un message de liaison latérale comprenant une indication d'une adresse réseau associée à un service basé sur la localisation et comprenant en outre un premier numéro de version associé à des données cartographiques pour une région associée à une localisation de l'UE ;
accéder (1510) au service basé sur la localisation via une connexion avec un dispositif réseau, l'accès au service basé sur la localisation étant effectué à l'aide de l'adresse réseau reçue de l'unité en bord de route et basé au moins en partie sur la localisation de l'UE ;
recevoir (1515) des informations basées sur la localisation depuis le service basé sur la localisation via la connexion avec le dispositif réseau, les informations basées sur la localisation comprenant les données cartographiques correspondant au premier numéro de version ;
comparer le premier numéro de version à un deuxième numéro de version associé à des données cartographiques stockées au niveau de l'UE ; et
déterminer que le premier numéro de version est différent du deuxième numéro de version sur la base, au moins en partie, de la comparaison, l'accès au service basé sur la localisation étant basé au moins en partie sur le fait que le premier numéro de version et le deuxième numéro de version sont différents.

2. L'appareil selon la revendication 1, dans lequel le message de liaison latérale indique en outre un ensemble d'un ou plusieurs emplacements auxquels l'UE accède au service basé sur la localisation pour recevoir les informations basées sur la localisation, les informations basées sur la localisation comprenant des informations de phase de signal et de synchronisation pour un emplacement respectif de l'ensemble d'un ou plusieurs emplacements.

3. L'appareil selon la revendication 2, dans lequel les instructions sont en outre exécutables par le processeur pour amener l'appareil à :
comparer l'emplacement de l'UE à l'ensemble d'un ou plusieurs emplacements ; et
déterminer que l'emplacement de l'UE correspond à un emplacement de l'ensemble d'un ou plusieurs emplacements sur la base, au moins en partie, de la comparaison, l'accès au service basé sur la localisation étant basé au moins en partie sur l'emplacement de l'UE correspondant à l'emplacement de l'ensemble d'un ou plusieurs emplacements.

4. L'appareil selon la revendication 1, dans lequel :
le message de liaison latérale indique en outre une région dans laquelle un réseau associé à la région fournit des informations géo-protégées ; et
les informations basées sur la localisation comprennent les informations géo-protégées.

5. L'appareil selon la revendication 4, dans lequel les instructions sont en outre exécutables par le processeur pour amener l'appareil à :
comparer l'adresse réseau à une deuxième adresse réseau associée au service basé sur la localisation stockée au niveau de l'UE, l'accès au service basé sur la localisation étant basé au moins en partie sur la comparaison.

6. L'appareil selon la revendication 5, dans lequel les instructions sont en outre exécutables par le processeur pour amener l'appareil à :
déterminer que l'adresse réseau est différente de la deuxième adresse réseau sur la base, au moins en partie, de la comparaison ; et
stocker l'adresse réseau au niveau de l'UE sur la base, au moins en partie, du fait que l'adresse réseau est différente de la deuxième adresse réseau.

7. L'appareil selon la revendication 1, dans lequel :
le message de liaison latérale comprend des informations commerciales spécifiques à l'emplacement de l'UE ; et
l'accès au service basé sur l'emplacement est basé au moins en partie sur les informations commerciales ; ou
le message de liaison latérale comprend une indication d'un type de service associé au service basé sur l'emplacement ; et
l'accès au service basé sur l'emplacement est basé au moins en partie sur le type de service ; ou
le message de liaison latérale comprend une indication d'une description d'application associée au service basé sur l'emplacement ; et
l'accès au service basé sur l'emplacement est basé au moins en partie sur la description de l'application.

8. L'appareil selon la revendication 1, dans lequel les instructions sont en outre exécutables par le processeur pour amener l'appareil à :
recevoir un deuxième message de liaison latérale indiquant un premier ensemble d'un ou plusieurs emplacements auxquels l'UE accède au service basé sur l'emplacement pour recevoir les informations basées sur l'emplacement, un deuxième ensemble d'un ou plusieurs emplacements auxquels l'UE reçoit les informations basées sur l'emplacement d'une ou plusieurs deuxièmes unités en bordure de route sans accéder au service basé sur l'emplacement, un numéro de version associé aux informations basées sur l'emplacement, une région dans laquelle un réseau associé à la région fournit les informations basées sur l'emplacement, des informations commerciales spécifiques à l'emplacement de l'UE, ou une combinaison de celles-ci, dans lequel l'accès au service basé sur l'emplacement est basé au moins en partie sur la réception du deuxième message de liaison latérale.

9. L'appareil selon la revendication 1, dans lequel les instructions sont en outre exécutables par le processeur pour amener l'appareil à :
recevoir, de l'unité en bordure de route, une demande de code d'authentification associé à l'UE ; et
transmettre, en réponse à la réception de la demande, le code d'authentification à l'unité en bordure de route, la réception du message de liaison latérale étant basée au moins en partie sur la transmission du code d'authentification.

10. Procédé de communication sans fil au niveau d'un équipement d'utilisateur, UE, le procédé comprenant les étapes consistant à :
recevoir (1505), en provenance d'une unité de bord de route, un message de liaison latérale comprenant une indication d'une adresse réseau associée à un service basé sur la localisation et comprenant en outre un premier numéro de version associé à des données cartographiques pour une région associée à un emplacement de l'UE ;
accéder (1510) au service basé sur la localisation via une connexion avec un dispositif réseau, l'accès au service basé sur la localisation étant effectué à l'aide de l'adresse réseau reçue de l'unité de bord de route et basé au moins en partie sur l'emplacement de l'UE ;
recevoir (1515) d'informations basées sur la localisation en provenance du service basé sur la localisation via la connexion avec le dispositif réseau, les informations basées sur la localisation comprenant les données cartographiques correspondant au premier numéro de version ;
comparer le premier numéro de version à un deuxième numéro de version associé à des données cartographiques stockées au niveau de l'UE ; et
déterminer que le premier numéro de version est différent du deuxième numéro de version sur la base, au moins en partie, de la comparaison, l'accès au service basé sur la localisation étant basé, au moins en partie, sur le fait que le premier numéro de version et le deuxième numéro de version sont différents.
